# EUROPEAN PATENT APPLICATION

(11) **EP 3 484 218 A1**
(43) Date of publication of application: **15.05.2019**
(21) Application number: 17838620.7
(22) Date of filing: 02.08.2017
(51) Int. Cl.: H04W 56/00

(54) **INFORMATION TRANSMISSION METHOD, TERMINAL, AND NETWORK DEVICE**

(30) Priority: 11.08.2016 CN 201610658865
(71) Applicant: Huawei Technologies Co., Ltd., Longgang District Shenzhen, Guangdong 518129 (CN)
(72) Inventor: CHENG, Yan, Shenzhen Guangdong 518129 (CN)
(74) Representative: Maiwald Patent- und Rechtsanwaltsgesellschaft mbH
(86) International application number: PCT/CN2017/095652
(87) International publication number: WO 2018/028490

(57) **Abstract**

Embodiments of this application provide an information transmission method, a terminal, and a network device. The information transmission method in this application may include: determining, by a terminal, a subcarrier spacing corresponding to a synchronization signal, where the subcarrier spacing corresponding to the synchronization signal is a largest subcarrier spacing in a subcarrier spacing set corresponding to a serving cell carrying the synchronization signal; and detecting, by the terminal, the synchronization signal based on the subcarrier spacing corresponding to the synchronization signal. The embodiments of this application can be flexibly applied to different application scenarios.

## Description

This application claims priority to Chinese Patent Application No. 201610658865.6, filed with the Chinese Patent Office on August 11, 2016 and entitled "INFORMATION TRANSMISSION METHOD, TERMINAL, AND NETWORK DEVICE", which is incorporated herein by reference in its entirety.

### TECHNICAL FIELD

Embodiments of this application relate to communications technologies, and in particular, to an information transmission method, a terminal, and a network device.

### BACKGROUND

A 5th Generation (5th Generation, 5G) communications system or a new radio (New Radio, NR) communications system is purpose-built to support higher system performance and support different services, different deployment scenarios, and different spectrums. The services may be, for example, an enhanced mobile broadband (enhanced Mobile Broadband, eMBB) service, a machine type communication (Machine Type Communication, MTC) service, an ultra-reliable and low latency communications (Ultra-reliable and low latency communications, URLLC) service, a Multimedia Broadcast Multicast Service (Multimedia Broadcast Multicast Service, MBMS), and a positioning service. The deployment scenarios may be, for example, an indoor hotspot (Indoor hotspot) scenario, a dense urban (dense urban) scenario, a suburban scenario, an urban macro (Urban Macro) scenario, and a high-speed railway scenario. The spectrums may be, for example, any frequency ranges within 100 GHz.

In a current communications system, different terminals have same processing bandwidth, and have a same processing capability. Consequently, it is difficult for the current communications system to support different services, different deployment scenarios, and scenarios corresponding to different spectrum resources.

How to enable a communications system to support different application scenarios such as different services, different deployment scenarios, and different spectrum resource scenarios needs to be further researched.

### SUMMARY

Embodiments of this application provide an information transmission method, a terminal, and a network device, to flexibly support a plurality of different application scenarios.

According to a first aspect, an embodiment of this application provides an information transmission method. The method may include:
determining, by a terminal, a largest subcarrier spacing in a subcarrier spacing set corresponding to a serving cell carrying a synchronization signal as a subcarrier spacing corresponding to the synchronization signal; and
detecting, by the terminal, the synchronization signal based on the subcarrier spacing corresponding to the synchronization signal.

In the method, different subcarrier spacings in the subcarrier spacing set corresponding to the serving cell may correspond to different application scenarios, so that the information transmission method between the terminal and a network device can be flexibly applied to different application scenarios.

Regardless of which subcarrier spacing in the subcarrier spacing set corresponding to the serving cell is used for another channel or signal in the serving cell, the terminal detects the synchronization signal by using the same subcarrier spacing, so that the terminal does not need to perform blind detection on the synchronization signal to identify the subcarrier spacing used for the synchronization signal. This shortens a time used by the terminal to detect the synchronization signal, and shortens a time used by the terminal to synchronize with the serving cell, that is, shortens a time used by the terminal to access the serving cell.

When it is determined that the synchronization signal is detected based on the largest subcarrier spacing in the subcarrier spacing set corresponding to the serving cell, the synchronization signal can resist a Doppler shift brought by a high-speed scenario, to increase a synchronization signal detection success rate.

In an implementation of the first aspect, a cyclic prefix corresponding to a symbol carrying the synchronization signal is a longest cyclic prefix in cyclic prefixes corresponding to the subcarrier spacing corresponding to the synchronization signal.

In this manner, a coverage area of the synchronization signal in the serving cell and a coverage area of a broadcast channel in the serving cell can be expanded, and robustness of the synchronization signal in the serving cell and robustness of the broadcast channel in the serving cell can be improved.

In another implementation of the first aspect, the method may further include:
determining, by the terminal based on a sequence corresponding to the synchronization signal, a time-frequency resource carrying system information.

In still another implementation of the first aspect, the determining, by the terminal based on a sequence corresponding to the synchronization signal, a time-frequency resource carrying system information includes:
if the sequence corresponding to the synchronization signal is a first sequence, determining, by the terminal, that the time-frequency resource carrying the system information is a first time-frequency resource; or
if the sequence corresponding to the synchronization signal is a second sequence, determining, by the terminal, that the time-frequency resource carrying the system information is a second time-frequency resource, where
a frequency domain location of the first time-frequency resource is the same as a frequency domain location of a time-frequency resource carrying the synchronization signal, or a frequency domain location corresponding to the first time-frequency resource includes a frequency domain location corresponding to a time-frequency resource carrying the synchronization signal; and
a frequency domain location of the second time-frequency resource is adjacent to the frequency domain location of the time-frequency resource carrying the synchronization signal, or a frequency domain location corresponding to the second time-frequency resource and the frequency domain location corresponding to the time-frequency resource carrying the synchronization signal are separated by a fixed frequency shift.

In the method, it may be determined, based on the sequence corresponding to the synchronization signal, that the time-frequency resource carrying the system information is the first time-frequency resource or the second time-frequency resource, so that a system can flexibly use, depending on an actual application scenario and an actual requirement, the first time-frequency resource and/or the second time-frequency resource to carry the system information, to better support dynamic TDD, better support forward compatibility, and better support multi-beam transmission.

In yet another implementation of the first aspect, a start symbol of the first time-frequency resource is adjacent to a last symbol carrying the synchronization signal; or
a start symbol of the first time-frequency resource is a next symbol of a last symbol carrying the synchronization signal; or
if a last symbol carrying the synchronization signal is a symbol *l*, a start symbol of the first time-frequency resource is a symbol (*l*+1) or a symbol (*l*+1) mod *L*, where *l*=0,1,···*L-*1, and *L* is a positive integer; and
a symbol of the second time-frequency resource is the same as the symbol carrying the synchronization signal; or
a start symbol of the second time-frequency resource is the same as a start symbol carrying a primary synchronization signal included in the synchronization signal.

In yet another implementation of the first aspect, the frequency domain location of the second time-frequency resource is adjacent to the frequency domain location of the time-frequency resource carrying the synchronization signal, and is distributed on two sides of the frequency domain location of the time-frequency resource carrying the synchronization signal.

In yet another implementation of the first aspect, the first sequence is generated in a first combination manner by using two 31-length sequences, the second sequence is generated in a second combination manner by using the two 31-length sequences, and the first combination manner is different from the second combination manner.

In yet another implementation of the first aspect, the system information includes a symbol location indicator field; and
the symbol location indicator field is used to indicate a location of a start symbol carrying the synchronization signal; or
the symbol location indicator field is used to indicate an index of a start symbol carrying the synchronization signal; or
the symbol location indicator field is used to indicate a time domain shift between a start symbol carrying the synchronization signal and a first symbol of a sub frame carrying the synchronization signal; or
the location indicator field is used to indicate a location of the start symbol carrying the primary synchronization signal; or
the symbol location indicator field is used to indicate an index of the start symbol carrying the primary synchronization signal; or
the symbol location indicator field is used to indicate a time domain shift between the start symbol carrying the primary synchronization signal and a first symbol of a subframe carrying the primary synchronization signal.

In the method, the terminal determines a time domain location for carrying the synchronization signal in a radio frame, so that the terminal can be supported in performing frame timing during multi-beam transmission.

In yet another implementation of the first aspect, a scrambling code corresponding to the system information is used to indicate a subframe carrying the system information.

In yet another implementation of the first aspect, the synchronization signal is a secondary synchronization signal.

According to a second aspect, an embodiment of this application further provides an information transmission method. The method may include:
determining, by a terminal, a sequence corresponding to a synchronization signal; and
determining, by the terminal based on the sequence corresponding to the synchronization signal, a time-frequency resource carrying system information.

In the information transmission method, different time-frequency resources carrying the system information may correspond to different application scenarios, so that different sequences corresponding to the synchronization signal may correspond to different application scenarios, and therefore the information transmission method between the terminal and a network device can be flexibly applied to different application scenarios.

In an implementation of the second aspect, the determining, by the terminal based on the sequence corresponding to the synchronization signal, a time-frequency resource carrying system information includes:
if the sequence corresponding to the synchronization signal is a first sequence, determining, by the terminal, that the time-frequency resource carrying the system information is a first time-frequency resource; or
if the sequence corresponding to the synchronization signal is a second sequence, determining, by the terminal, that the time-frequency resource carrying the system information is a second time-frequency resource, where
a frequency domain location of the first time-frequency resource is the same as a frequency domain location of a time-frequency resource carrying the synchronization signal, or a frequency domain location corresponding to the first time-frequency resource includes a frequency domain location corresponding to a time-frequency resource carrying the synchronization signal; and
a frequency domain location of the second time-frequency resource is adjacent to the frequency domain location of the time-frequency resource carrying the synchronization signal, or a frequency domain location corresponding to the second time-frequency resource and the frequency domain location corresponding to the time-frequency resource carrying the synchronization signal are separated by a fixed frequency shift.

In another implementation of the second aspect, a start symbol of the first time-frequency resource is adjacent to a last symbol carrying the synchronization signal; or
a start symbol of the first time-frequency resource is a next symbol of a last symbol carrying the synchronization signal; or
if a last symbol carrying the synchronization signal is a symbol *l*, a start symbol of the first time-frequency resource is a symbol (*l*+1) or a symbol (*l*+1) mod *L*, where *l*=0,1,···*L-*1, and *L* is a positive integer; and
a symbol of the second time-frequency resource is the same as a symbol carrying the synchronization signal; or a start symbol of the second time-frequency resource is the same as a start symbol carrying a primary synchronization signal included in the synchronization signal.

In still another implementation of the second aspect, the first sequence is generated in a first combination manner by using two 31-length sequences, the second sequence is generated in a second combination manner by using the two 31-length sequences, and the first combination manner is different from the second combination manner.

According to a third aspect, an embodiment of this application may further provide an information transmission method, including:
determining, by a network device, a largest subcarrier spacing in a subcarrier spacing set corresponding to a serving cell carrying a synchronization signal as a subcarrier spacing corresponding to the synchronization signal; and
sending, by the network device, the synchronization signal based on the subcarrier spacing corresponding to the synchronization signal.

In the method, different subcarrier spacings in the subcarrier spacing set corresponding to the serving cell may correspond to different application scenarios, so that the information transmission method between a terminal and the network device can be flexibly applied to different application scenarios.

In another implementation of the third aspect, before the sending, by the network device, the synchronization signal based on the subcarrier spacing corresponding to the synchronization signal, the method further includes:
determining, by the network device based on the subcarrier spacing corresponding to the synchronization signal, a cyclic prefix set corresponding to the subcarrier spacing; and
determining, by the network device based on the cyclic prefix set, that a cyclic prefix corresponding to a symbol carrying the synchronization signal is a longest cyclic prefix in the cyclic prefix set.

In still another implementation of the third aspect, the sending, by the network device, the synchronization signal based on the subcarrier spacing corresponding to the synchronization signal includes:
sending, by the network device, the synchronization signal based on the subcarrier spacing corresponding to the synchronization signal and the cyclic prefix corresponding to the symbol carrying the synchronization signal.

In yet another implementation of the third aspect, the method may further include:
determining, by the network device, a time-frequency resource carrying system information; and
determining, by the network device based on the time-frequency resource carrying the system information, a sequence corresponding to the synchronization signal.

In the information transmission method, different time-frequency resources carrying the system information may correspond to different application scenarios, so that different sequences corresponding to the synchronization signal may correspond to different application scenarios, and therefore the information transmission method between the terminal and the network device can be flexibly applied to different application scenarios.

In yet another implementation of the third aspect, the determining, by the network device based on the time-frequency resource carrying the system information, a sequence corresponding to the synchronization signal may include:
if the time-frequency resource carrying the system information is a first time-frequency resource, determining, by the network device, that the sequence corresponding to the synchronization signal is a first sequence; or
if the time-frequency resource carrying the system information is a second time-frequency resource, determining, by the network device, that the sequence corresponding to the synchronization signal is a second sequence, where
a frequency domain location of the first time-frequency resource is the same as a frequency domain location of a time-frequency resource carrying the synchronization signal, or a frequency domain location of the first time-frequency resource includes a frequency domain location of a time-frequency resource carrying the synchronization signal; and
a frequency domain location of the second time-frequency resource is adjacent to the frequency domain location of the time-frequency resource carrying the synchronization signal, or a frequency domain location of the second time-frequency resource and the frequency domain location of the time-frequency resource carrying the synchronization signal are separated by a fixed frequency shift.

In yet another implementation of the third aspect, a start symbol of the first time-frequency resource is adjacent to a last symbol carrying the synchronization signal; or
a start symbol of the first time-frequency resource is a next symbol of a last symbol carrying the synchronization signal; or
if a last symbol carrying the synchronization signal is a symbol *l*, a start symbol of the first time-frequency resource is a symbol (*l*+1) or a symbol (*l*+1) mod *L*, where *l*=0,1,···*L-*1, and *L* is a positive integer; and
a symbol of the second time-frequency resource is the same as the symbol carrying the synchronization signal; or a start symbol of the second time-frequency resource is the same as a start symbol carrying a primary synchronization signal included in the synchronization signal.

In yet another implementation of the third aspect, the frequency domain location of the second time-frequency resource is adjacent to the frequency domain location of the time-frequency resource carrying the synchronization signal, and is distributed on two sides of the frequency domain location of the time-frequency resource carrying the synchronization signal.

In yet another implementation of the third aspect, the determining, by the network device based on the time-frequency resource carrying the system information, a sequence corresponding to the synchronization signal includes:
if the time-frequency resource carrying the system information is a first time-frequency resource, determining, by the network device, that the sequence corresponding to the synchronization signal is a first sequence; or
if the time-frequency resource carrying the system information is a second time-frequency resource, determining, by the network device, that the sequence corresponding to the synchronization signal is a second sequence, where
the first time-frequency resource and a time-frequency resource carrying the synchronization signal are subject to time division multiplexing, and the second time-frequency resource and the time-frequency resource carrying the synchronization signal are subject to frequency division multiplexing.

In yet another implementation of the third aspect, the first sequence is generated in a first combination manner by using two 31-length sequences, the second sequence is generated in a second combination manner by using the two 31-length sequences, and the first combination manner is different from the second combination manner.

In yet another implementation of the third aspect, the system information includes a symbol location indicator field; and
the symbol location indicator field is used to indicate a location of a start symbol carrying the synchronization signal; or
the symbol location indicator field is used to indicate an index of a start symbol carrying the synchronization signal; or
the symbol location indicator field is used to indicate a time domain shift between a start symbol carrying the synchronization signal and a first symbol of a sub frame carrying the synchronization signal; or
the location indicator field is used to indicate a location of the start symbol carrying the primary synchronization signal; or
the symbol location indicator field is used to indicate an index of the start symbol carrying the primary synchronization signal; or
the symbol location indicator field is used to indicate a time domain shift between the start symbol carrying the primary synchronization signal and a first symbol of a subframe carrying the primary synchronization signal.

In yet another implementation of the third aspect, a scrambling code corresponding to the system information is used to indicate a subframe carrying the system information.

In yet another implementation of the third aspect, the synchronization signal is a secondary synchronization signal.

According to a fourth aspect, an information transmission method includes:
determining, by a network device, a time-frequency resource carrying system information; and
determining, by the network device based on the time-frequency resource carrying the system information, a sequence corresponding to a synchronization signal.

In an implementation of the fourth aspect, the determining, by the network device based on the time-frequency resource carrying the system information, a sequence corresponding to a synchronization signal includes:
if the time-frequency resource carrying the system information is a first time-frequency resource, determining, by the network device, that the sequence corresponding to the synchronization signal is a first sequence; or
if the time-frequency resource carrying the system information is a second time-frequency resource, determining, by the network device, that the sequence corresponding to the synchronization signal is a second sequence, where
a frequency domain location of the first time-frequency resource is the same as a frequency domain location of a time-frequency resource carrying the synchronization signal, or a frequency domain location of the first time-frequency resource includes a frequency domain location of a time-frequency resource carrying the synchronization signal; and
a frequency domain location of the second time-frequency resource is adjacent to the frequency domain location of the time-frequency resource carrying the synchronization signal, or a frequency domain location of the second time-frequency resource and the frequency domain location of the time-frequency resource carrying the synchronization signal are separated by a fixed frequency shift.

In another implementation of the fourth aspect, a start symbol of the first time-frequency resource is adjacent to a last symbol carrying the synchronization signal; or a start symbol of the first time-frequency resource is a next symbol of a last symbol carrying the synchronization signal; or if a last symbol carrying the synchronization signal is a symbol *l*, a start symbol of the first time-frequency resource is a symbol (*l*+1) or a symbol (*l*+1) mod *L*, where *l*=0,1,···*L-*1, and *L* is a positive integer; and
a symbol of the second time-frequency resource is the same as a symbol carrying the synchronization signal; or a start symbol of the second time-frequency resource is the same as a start symbol carrying a primary synchronization signal included in the synchronization signal.

In still another implementation of the fourth aspect, the determining, by the network device based on the time-frequency resource carrying the system information, a sequence corresponding to a synchronization signal includes:
if the time-frequency resource carrying the system information is a first time-frequency resource, determining, by the network device, that the sequence corresponding to the synchronization signal is a first sequence; or
if the time-frequency resource carrying the system information is a second time-frequency resource, determining, by the network device, that the sequence corresponding to the synchronization signal is a second sequence, where
the first time-frequency resource and a time-frequency resource carrying the synchronization signal are subject to time division multiplexing, and the second time-frequency resource and the time-frequency resource carrying the synchronization signal are subject to frequency division multiplexing.

In yet another implementation of the fourth aspect, the first sequence is generated in a first combination manner by using two 31-length sequences, the second sequence is generated in a second combination manner by using the two 31-length sequences, and the first combination manner is different from the second combination manner.

According to a fifth aspect, an embodiment of this application further provides a terminal, including:
a receiving unit, configured to receive information sent by a network device; and
a processing unit, configured to: determine a subcarrier spacing corresponding to a synchronization signal, where the subcarrier spacing corresponding to the synchronization signal is a largest subcarrier spacing in a subcarrier spacing set corresponding to a serving cell carrying the synchronization signal; and detect the synchronization signal based on the subcarrier spacing corresponding to the synchronization signal and the received information sent by the network device.

In an implementation of the fifth aspect, a cyclic prefix corresponding to a symbol carrying the synchronization signal is a longest cyclic prefix in cyclic prefixes corresponding to the subcarrier spacing corresponding to the synchronization signal.

In another implementation of the fifth aspect, the processing unit is further configured to determine, based on a sequence corresponding to the synchronization signal, a time-frequency resource carrying system information.

In still another implementation of the fifth aspect, the processing unit is specifically configured to: if the sequence corresponding to the synchronization signal is a first sequence, determine that the time-frequency resource carrying the system information is a first time-frequency resource; or if the sequence corresponding to the synchronization signal is a second sequence, determine that the time-frequency resource carrying the system information is a second time-frequency resource, where
a frequency domain location of the first time-frequency resource is the same as a frequency domain location of a time-frequency resource carrying the synchronization signal, or a frequency domain location corresponding to the first time-frequency resource includes a frequency domain location corresponding to a time-frequency resource carrying the synchronization signal; and a frequency domain location of the second time-frequency resource is adjacent to the frequency domain location of the time-frequency resource carrying the synchronization signal, or a frequency domain location corresponding to the second time-frequency resource and the frequency domain location corresponding to the time-frequency resource carrying the synchronization signal are separated by a fixed frequency shift.

In still another implementation of the fifth aspect, a start symbol of the first time-frequency resource is adjacent to a last symbol carrying the synchronization signal; or
a start symbol of the first time-frequency resource is a next symbol of a last symbol carrying the synchronization signal; or
if a last symbol carrying the synchronization signal is a symbol *l*, a start symbol of the first time-frequency resource is a symbol (*l*+1) or a symbol (*l*+1) mod *L*, where *l*=0,1,···*L-*1, and *L* is a positive integer; and
a symbol of the second time-frequency resource is the same as the symbol carrying the synchronization signal; or a start symbol of the second time-frequency resource is the same as a start symbol carrying a primary synchronization signal included in the synchronization signal.

In yet another implementation of the fifth aspect, the frequency domain location of the second time-frequency resource is adjacent to the frequency domain location of the time-frequency resource carrying the synchronization signal, and is distributed on two sides of the frequency domain location of the time-frequency resource carrying the synchronization signal.

In yet another implementation of the fifth aspect, the first sequence is generated in a first combination manner by using two 31-length sequences, the second sequence is generated in a second combination manner by using the two 31-length sequences, and the first combination manner is different from the second combination manner.

In yet another implementation of the fifth aspect, the system information includes a symbol location indicator field; and
the symbol location indicator field is used to indicate a location of a start symbol carrying the synchronization signal; or
the symbol location indicator field is used to indicate an index of a start symbol carrying the synchronization signal; or
the symbol location indicator field is used to indicate a time domain shift between a start symbol carrying the synchronization signal and a first symbol of a sub frame carrying the synchronization signal; or
the location indicator field is used to indicate a location of the start symbol carrying the primary synchronization signal; or
the symbol location indicator field is used to indicate an index of the start symbol carrying the primary synchronization signal; or
the symbol location indicator field is used to indicate a time domain shift between the start symbol carrying the primary synchronization signal and a first symbol of a subframe carrying the primary synchronization signal.

In yet another implementation of the fifth aspect, a scrambling code corresponding to the system information is used to indicate a subframe carrying the system information.

In yet another implementation of the fifth aspect, the synchronization signal is a secondary synchronization signal.

According to a sixth aspect, an embodiment of this application further provides a terminal, including:
a receiving unit, configured to receive a synchronization signal sent by a network device; and
a processing unit, configured to: determine a sequence corresponding to the synchronization signal based on the received synchronization signal sent by the network device, and determine, based on the sequence corresponding to the synchronization signal, a time-frequency resource carrying system information.

In an implementation of the sixth aspect, the processing unit is specifically configured to: if the sequence corresponding to the synchronization signal is a first sequence, determine that the time-frequency resource carrying the system information is a first time-frequency resource; or if the sequence corresponding to the synchronization signal is a second sequence, determine that the time-frequency resource carrying the system information is a second time-frequency resource, where
a frequency domain location of the first time-frequency resource is the same as a frequency domain location of a time-frequency resource carrying the synchronization signal, or a frequency domain location corresponding to the first time-frequency resource includes a frequency domain location corresponding to a time-frequency resource carrying the synchronization signal; and
a frequency domain location of the second time-frequency resource is adjacent to the frequency domain location of the time-frequency resource carrying the synchronization signal, or a frequency domain location corresponding to the second time-frequency resource and the frequency domain location corresponding to the time-frequency resource carrying the synchronization signal are separated by a fixed frequency shift.

In another implementation of the sixth aspect, a start symbol of the first time-frequency resource is adjacent to a last symbol carrying the synchronization signal; or
a start symbol of the first time-frequency resource is a next symbol of a last symbol carrying the synchronization signal; or
if a last symbol carrying the synchronization signal is a symbol *l*, a start symbol of the first time-frequency resource is a symbol (*l*+1) or a symbol (*l*+1) mod *L*, where *l*=0,1,···*L-*1, and *L* is a positive integer; and
a symbol of the second time-frequency resource is the same as a symbol carrying the synchronization signal; or a start symbol of the second time-frequency resource is the same as a start symbol carrying a primary synchronization signal included in the synchronization signal.

In still another implementation of the sixth aspect, the first sequence is generated in a first combination manner by using two 31-length sequences, the second sequence is generated in a second combination manner by using the two 31-length sequences, and the first combination manner is different from the second combination manner.

According to a seventh aspect, an embodiment of this application further provides a network device, including:
a processing unit, configured to determine a subcarrier spacing corresponding to a synchronization signal, where the subcarrier spacing corresponding to the synchronization signal is a largest subcarrier spacing in a subcarrier spacing set corresponding to a serving cell carrying the synchronization signal; and
a sending unit, configured to send the synchronization signal based on the subcarrier spacing corresponding to the synchronization signal.

In an implementation of the seventh aspect, the processing unit is further configured to: determine, based on the subcarrier spacing corresponding to the synchronization signal, a cyclic prefix set corresponding to the subcarrier spacing; and determine, based on the cyclic prefix set, that a cyclic prefix corresponding to a symbol carrying the synchronization signal is a longest cyclic prefix in the cyclic prefix set.

In another implementation of the seventh aspect, the sending unit is specifically configured to send the synchronization signal based on the subcarrier spacing corresponding to the synchronization signal and the cyclic prefix corresponding to the symbol carrying the synchronization signal.

In still another implementation of the seventh aspect, the processing unit is further configured to: determine a time-frequency resource carrying system information; and determine, based on the time-frequency resource carrying the system information, a sequence corresponding to the synchronization signal.

In yet another implementation of the seventh aspect, the processing unit is specifically configured to: if the time-frequency resource carrying the system information is a first time-frequency resource, determine that the sequence corresponding to the synchronization signal is a first sequence; or if the time-frequency resource carrying the system information is a second time-frequency resource, determine that the sequence corresponding to the synchronization signal is a second sequence, where
a frequency domain location of the first time-frequency resource is the same as a frequency domain location of a time-frequency resource carrying the synchronization signal, or a frequency domain location of the first time-frequency resource includes a frequency domain location of a time-frequency resource carrying the synchronization signal; and
a frequency domain location of the second time-frequency resource is adjacent to the frequency domain location of the time-frequency resource carrying the synchronization signal, or a frequency domain location of the second time-frequency resource and the frequency domain location of the time-frequency resource carrying the synchronization signal are separated by a fixed frequency shift.

In yet another implementation of the seventh aspect, a start symbol of the first time-frequency resource is adjacent to a last symbol carrying the synchronization signal; or
a start symbol of the first time-frequency resource is a next symbol of a last symbol carrying the synchronization signal; or
if a last symbol carrying the synchronization signal is a symbol *l*, a start symbol of the first time-frequency resource is a symbol (*l*+1) or a symbol (*l*+1) mod *L*, where *l*=0,1,···*L-*1, and *L* is a positive integer; and
a symbol of the second time-frequency resource is the same as the symbol carrying the synchronization signal; or a start symbol of the second time-frequency resource is the same as a start symbol carrying a primary synchronization signal included in the synchronization signal.

In yet another implementation of the seventh aspect, the frequency domain location of the second time-frequency resource is adjacent to the frequency domain location of the time-frequency resource carrying the synchronization signal, and is distributed on two sides of the frequency domain location of the time-frequency resource carrying the synchronization signal.

In yet another implementation of the seventh aspect, the processing unit is specifically configured to: if the time-frequency resource carrying the system information is a first time-frequency resource, determine that the sequence corresponding to the synchronization signal is a first sequence; or if the time-frequency resource carrying the system information is a second time-frequency resource, determine that the sequence corresponding to the synchronization signal is a second sequence, where
the first time-frequency resource and a time-frequency resource carrying the synchronization signal are subject to time division multiplexing, and the second time-frequency resource and the time-frequency resource carrying the synchronization signal are subject to frequency division multiplexing.

In yet another implementation of the seventh aspect, the first sequence is generated in a first combination manner by using two 31-length sequences, the second sequence is generated in a second combination manner by using the two 31-length sequences, and the first combination manner is different from the second combination manner.

In yet another implementation of the seventh aspect, the system information includes a symbol location indicator field; and
the symbol location indicator field is used to indicate a location of a start symbol carrying the synchronization signal; or
the symbol location indicator field is used to indicate an index of a start symbol carrying the synchronization signal; or
the symbol location indicator field is used to indicate a time domain shift between a start symbol carrying the synchronization signal and a first symbol of a sub frame carrying the synchronization signal; or
the location indicator field is used to indicate a location of the start symbol carrying the primary synchronization signal; or
the symbol location indicator field is used to indicate an index of the start symbol carrying the primary synchronization signal; or
the symbol location indicator field is used to indicate a time domain shift between the start symbol carrying the primary synchronization signal and a first symbol of a subframe carrying the primary synchronization signal.

In yet another implementation of the seventh aspect, a scrambling code corresponding to the system information is used to indicate a subframe carrying the system information.

In yet another implementation of the seventh aspect, the synchronization signal is a secondary synchronization signal.

According to an eighth aspect, an embodiment of this application further provides a network device, including:
a processing unit, configured to: determine a time-frequency resource carrying system information; and determine, based on the time-frequency resource carrying the system information, a sequence corresponding to a synchronization signal; and
a sending unit, configured to send the synchronization signal.

In an implementation of the eighth aspect, the processing unit is specifically configured to: if the time-frequency resource carrying the system information is a first time-frequency resource, determine that the sequence corresponding to the synchronization signal is a first sequence; or if the time-frequency resource carrying the system information is a second time-frequency resource, determine that the sequence corresponding to the synchronization signal is a second sequence, where
a frequency domain location of the first time-frequency resource is the same as a frequency domain location of a time-frequency resource carrying the synchronization signal, or a frequency domain location of the first time-frequency resource includes a frequency domain location of a time-frequency resource carrying the synchronization signal; and
a frequency domain location of the second time-frequency resource is adjacent to the frequency domain location of the time-frequency resource carrying the synchronization signal, or a frequency domain location of the second time-frequency resource and the frequency domain location of the time-frequency resource carrying the synchronization signal are separated by a fixed frequency shift.

In another implementation of the eighth aspect, a start symbol of the first time-frequency resource is adjacent to a last symbol carrying the synchronization signal; or
a start symbol of the first time-frequency resource is a next symbol of a last symbol carrying the synchronization signal; or
if a last symbol carrying the synchronization signal is a symbol *l*, a start symbol of the first time-frequency resource is a symbol (*l*+1) or a symbol (*l*+1) mod *L*, where *l*=0,1,···*L-*1, and *L* is a positive integer; and
a symbol of the second time-frequency resource is the same as a symbol carrying the synchronization signal; or a start symbol of the second time-frequency resource is the same as a start symbol carrying a primary synchronization signal included in the synchronization signal.

In still another implementation of the eighth aspect, the processing unit is specifically configured to: if the time-frequency resource carrying the system information is a first time-frequency resource, determine that the sequence corresponding to the synchronization signal is a first sequence; or if the time-frequency resource carrying the system information is a second time-frequency resource, determine that the sequence corresponding to the synchronization signal is a second sequence, where
the first time-frequency resource and a time-frequency resource carrying the synchronization signal are subject to time division multiplexing, and the second time-frequency resource and the time-frequency resource carrying the synchronization signal are subject to frequency division multiplexing.

In yet another implementation of the eighth aspect, the first sequence is generated in a first combination manner by using two 31-length sequences, the second sequence is generated in a second combination manner by using the two 31-length sequences, and the first combination manner is different from the second combination manner.

According to the information transmission method, the terminal, and the network device that are provided in the embodiments of this application, the network device may determine the largest subcarrier spacing in the subcarrier spacing set corresponding to the serving cell carrying the synchronization signal as the subcarrier spacing corresponding to the synchronization signal, and send the synchronization signal based on the subcarrier spacing corresponding to the synchronization signal; and the terminal determines the largest subcarrier spacing in the subcarrier spacing set corresponding to the serving cell carrying the synchronization signal as the subcarrier spacing corresponding to the synchronization signal, and detects the synchronization signal based on the subcarrier spacing corresponding to the synchronization signal. Different subcarrier spacings in the subcarrier spacing set corresponding to the serving cell may correspond to different application scenarios, so that the information transmission method between the terminal and the network device can be flexibly applied to different application scenarios.

### BRIEF DESCRIPTION OF DRAWINGS

FIG. 1 is a flowchart of an information transmission method according to Embodiment 1 of this application;
FIG. 2 is a flowchart of an information transmission method according to Embodiment 2 of this application;
FIG. 3 is a diagram of a correspondence between a first time-frequency resource and a time-frequency resource carrying the synchronization signal;
FIG. 4 is a diagram of a correspondence between a second time-frequency resource and a time-frequency resource carrying the synchronization signal;
FIG. 5 is a flowchart of another information transmission method according to Embodiment 2 of this application;
FIG. 6 is a flowchart of still another information transmission method according to Embodiment 2 of this application;
FIG. 7 is a flowchart of an information transmission method according to Embodiment 3 of this application;
FIG. 8 is a flowchart of another information transmission method according to Embodiment 3 of this application;
FIG. 9 is a schematic structural diagram of a terminal according to Embodiment 4 of this application;
FIG. 10 is a schematic structural diagram of a terminal according to Embodiment 5 of this application;
FIG. 11 is a schematic structural diagram of a network device according to Embodiment 6 of this application; and
FIG. 12 is a schematic structural diagram of a network device according to Embodiment 7 of this application.

### DESCRIPTION OF EMBODIMENTS

An information transmission method and apparatus, a terminal, and a network device that are provided in the embodiments of this application can be applied to a 5G communications system, an NR communications system, and a more advanced communications system evolved based thereon, to support a plurality of different application scenarios.

In the following embodiments of this application, the terminal may be a terminal using a 5G communications technology, an NR communications technology, or a more advanced communications technology in the future; and each network device may be a network device using the 5G communications technology, the NR communications technology, or the more advanced communications technology in the future.

The terminal may be a wireless terminal, or may be a wired terminal. The wireless terminal may be a device that provides voice and/or data connectivity for a user, a handheld device with a wireless connection function, or another processing device connected to a wireless modem. The wireless terminal may communicate with one or more core networks by using a radio access network (Radio Access Network, RAN). The wireless terminal may be a mobile terminal, for example, a mobile phone (also referred to as a "cellular" phone), or a computer with a mobile terminal. For example, the wireless terminal may be a portable mobile apparatus, a pocket-sized mobile apparatus, a handheld mobile apparatus, a computer built-in mobile apparatus, or an in-vehicle mobile apparatus that exchanges voice and/or data with the radio access network. For example, the wireless terminal may be a device such as a personal communications service (Personal Communications Service, PCS) phone, a cordless telephone set, a Session Initiation Protocol (Session Initiation Protocol, SIP) phone, a wireless local loop (Wireless Local Loop, WLL) station, or a personal digital assistant (Personal Digital Assistant, PDA). The wireless terminal may also be referred to as a subscriber unit (Subscriber Unit), a subscriber station (Subscriber Station), a mobile station (Mobile Station), a mobile console (Mobile), a remote station (Remote Station), an access point (Access Point), a remote terminal (Remote Terminal), an access terminal (Access Terminal), a user terminal (User Terminal), a user agent (User Agent), a user device (User Device), or user equipment (User Equipment).

The network device may be an access network device, for example, a base station, also referred to as an access point (Access Point, AP). The base station described in this application is a form of a radio station, and may be a radio transceiver station that exchanges information with a mobile phone terminal in a specific radio coverage area by using a mobile switching center, or may be a device that communicates with a wireless terminal over an air interface in an access network by using one or more sectors. The base station may be configured to perform conversion between a received over-the-air frame and an Internet Protocol (Internet Protocol, IP) packet, and serve as a router between the wireless terminal and a remaining part of the access network. The remaining part of the access network may include an Internet Protocol (IP) network. The base station may further coordinate attribute management on the air interface. For example, the base station may be any one of a base transceiver station (Base Transceiver Station, BTS), a node base (Node Base, NodeB), an evolved NodeB (evolved Node B, eNB), and the like. This is not limited in this application.

In the information transmission method provided in the following embodiments of this application, the network device may determine a largest subcarrier spacing in a subcarrier spacing set corresponding to a serving cell carrying the synchronization signal as a subcarrier spacing corresponding to the synchronization signal, and send the synchronization signal based on the subcarrier spacing corresponding to the synchronization signal; and the terminal determines the largest subcarrier spacing in the subcarrier spacing set corresponding to the serving cell carrying the synchronization signal as the subcarrier spacing corresponding to the synchronization signal, and detects the synchronization signal based on the subcarrier spacing corresponding to the synchronization signal. Different subcarrier spacings in the subcarrier spacing set corresponding to the serving cell may correspond to different application scenarios, so that the information transmission method between the terminal and the network device can be flexibly applied to different application scenarios.

The information transmission method is illustrated in the following embodiments of this application by using a plurality of examples. It should be noted that, in all the embodiments of this application, unless otherwise stated, neither a sequence of steps in the embodiments nor interdependence between the steps is limited.

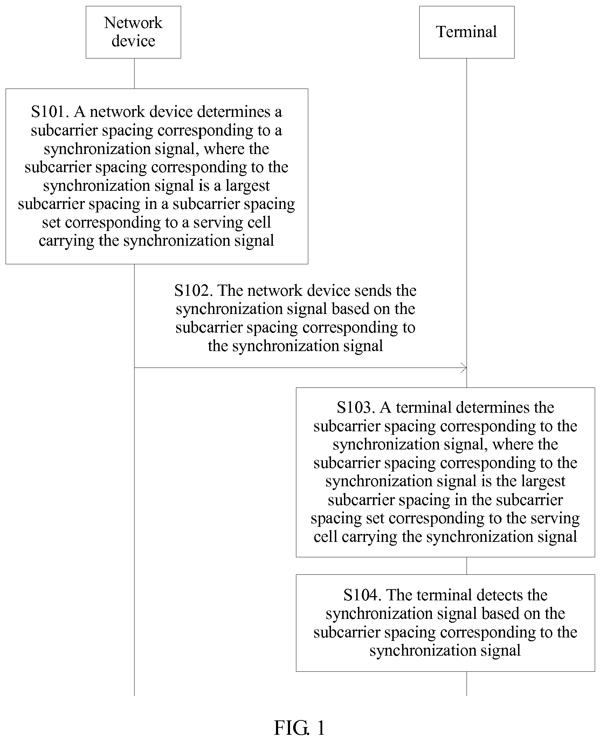

FIG. 1 is a flowchart of an information transmission method according to Embodiment 1 of this application. As shown in FIG. 1, the method may include the following steps.

S101. A network device determines a subcarrier spacing corresponding to a synchronization signal.

In step S101, the network device determines the subcarrier spacing corresponding to the synchronization signal, where the subcarrier spacing corresponding to the synchronization signal may be a largest subcarrier spacing in a subcarrier spacing set corresponding to a serving cell carrying the synchronization signal.

Specifically, the network device may determine, based on the subcarrier spacing set corresponding to the serving cell carrying the synchronization signal, the largest subcarrier spacing in the subcarrier spacing set as the subcarrier spacing corresponding to the synchronization signal.

The serving cell may be a primary serving cell (Primary serving cell) of a terminal, or may be a secondary serving cell (Secondary serving cell) of the terminal. In an implementation of this application, the serving cell (serving cell) may also be referred to as a carrier (carrier). In other words, one serving cell is one carrier.

For example, if the subcarrier spacing set corresponding to the serving cell carrying the synchronization signal includes a 15 kHz subcarrier spacing and a 30 kHz subcarrier spacing, the network device may determine the largest subcarrier spacing, namely, the 30 kHz subcarrier spacing, in the subcarrier spacing set as the subcarrier spacing corresponding to the synchronization signal.

In another embodiment, in step S101, the network device determines the subcarrier spacing corresponding to the synchronization signal, where the subcarrier spacing corresponding to the synchronization signal may be a smallest subcarrier spacing in the subcarrier spacing set corresponding to the serving cell carrying the synchronization signal.

Specifically, the network device may determine, based on the subcarrier spacing set corresponding to the serving cell carrying the synchronization signal, the smallest subcarrier spacing in the subcarrier spacing set as the subcarrier spacing corresponding to the synchronization signal.

For example, if the subcarrier spacing set corresponding to the serving cell carrying the synchronization signal includes a 15 kHz subcarrier spacing and a 30 kHz subcarrier spacing, the network device may determine the largest subcarrier spacing, namely, the 15 kHz subcarrier spacing, in the subcarrier spacing set as the subcarrier spacing corresponding to the synchronization signal.

In still another embodiment, in step S101, the network device determines the subcarrier spacing corresponding to the synchronization signal, where the subcarrier spacing corresponding to the synchronization signal may be a first subcarrier spacing in the subcarrier spacing set corresponding to the serving cell carrying the synchronization signal. The first subcarrier spacing is neither a smallest subcarrier spacing in the subcarrier spacing set nor a largest subcarrier spacing in the subcarrier spacing set, and may be, for example, a second largest subcarrier spacing in the subcarrier spacing set. For example, if the subcarrier spacing set corresponding to the serving cell carrying the synchronization signal includes a 15 kHz subcarrier spacing, a 30 kHz subcarrier spacing, and a 60 kHz subcarrier spacing, the network device may determine the largest subcarrier spacing, namely, the 30 kHz subcarrier spacing, in the subcarrier spacing set as the subcarrier spacing corresponding to the synchronization signal.

In this embodiment, regardless of which subcarrier spacing in the subcarrier spacing set corresponding to the serving cell is used for another channel or signal in the serving cell, the network device sends the synchronization signal by using the same subcarrier spacing, so that the terminal does not need to perform blind detection on the synchronization signal to identify the subcarrier spacing used for the synchronization signal. This shortens a time used by the terminal to detect the synchronization signal, and shortens a time used by the terminal to synchronize with the serving cell, that is, shortens a time used by the terminal to access the serving cell; and increases a synchronization signal detection success rate of the terminal, and increases a cell access success rate of the terminal.

Different subcarrier spacings in the subcarrier spacing set corresponding to the serving cell usually may be applied to different scenarios. For example, a large subcarrier spacing is used in at least one scenario of a high-frequency low-latency service and high-speed transmission, and a small subcarrier spacing is used in at least one scenario of a low-frequency scenario and a large-coverage scenario. Therefore, in the information transmission method in this embodiment of this application, for different subcarrier spacings in the subcarrier spacing set corresponding to the serving cell, the same subcarrier spacing can be used to send the synchronization signal and/or a broadcast channel, so that a uniform synchronization signal and system information transmission method can be used in different scenarios.

In addition, when the synchronization signal is sent based on the largest subcarrier spacing in the subcarrier spacing set corresponding to the serving cell, the synchronization signal can resist a Doppler shift brought by a high-speed scenario, to increase a synchronization signal detection success rate.

Step S101 may further include: The network device determines a subcarrier spacing corresponding to a broadcast channel, where the subcarrier spacing corresponding to the broadcast channel is the same as the subcarrier spacing corresponding to the synchronization signal. For example, the subcarrier spacing corresponding to the broadcast channel may be the largest subcarrier spacing in the subcarrier spacing set corresponding to the serving cell. Other descriptions are the same as the foregoing descriptions, and details are not described herein again.

S102. The network device sends the synchronization signal based on the subcarrier spacing corresponding to the synchronization signal.

Specifically, for example, the network device may generate, based on the subcarrier spacing corresponding to the synchronization signal, a symbol (for example, an OFDM symbol) corresponding to the synchronization signal, and send the synchronization signal to the terminal based on the symbol corresponding to the synchronization signal.

In another embodiment, step S102 may further include:
the network device determines a cyclic prefix corresponding to a symbol carrying the synchronization signal, where the cyclic prefix may be a longest cyclic prefix in cyclic prefixes (Cyclic Prefix, CP) corresponding to the subcarrier spacing corresponding to the synchronization signal; and
the network device sends the synchronization signal based on the cyclic prefix corresponding to the symbol carrying the synchronization signal and the subcarrier spacing corresponding to the synchronization signal.

It should be noted that, the synchronization signal in the embodiments of this application may include, for example, a primary synchronization signal and a secondary synchronization signal. The symbol mentioned in the embodiments of this application may be, for example, a single carrier frequency division multiple access (Single carrier Frequency Division Multiple Access, SC-FDMA) symbol or an orthogonal frequency division multiplexing (Orthogonal Frequency Division Multiplexing, OFDM) symbol.

S103. A terminal determines the subcarrier spacing corresponding to the synchronization signal.

In step S103, the terminal determines the subcarrier spacing corresponding to the synchronization signal, where the subcarrier spacing corresponding to the synchronization signal may be the largest subcarrier spacing in the subcarrier spacing set corresponding to the serving cell carrying the synchronization signal.

Specifically, the terminal may determine, based on the subcarrier spacing set corresponding to the serving cell carrying the synchronization signal, the largest subcarrier spacing in the subcarrier spacing set as the subcarrier spacing corresponding to the synchronization signal.

For example, if the subcarrier spacing set corresponding to the serving cell carrying the synchronization signal may include a 15 kHz subcarrier spacing and a 30 kHz subcarrier spacing, the terminal may determine the largest subcarrier spacing, namely, the 30 kHz subcarrier spacing, in the subcarrier spacing set as the subcarrier spacing corresponding to the synchronization signal.

In another embodiment, in step S103, the terminal determines the subcarrier spacing corresponding to the synchronization signal, where the subcarrier spacing corresponding to the synchronization signal may be the smallest subcarrier spacing in the subcarrier spacing set corresponding to the serving cell carrying the synchronization signal.

Specifically, the terminal may determine, based on the subcarrier spacing set corresponding to the serving cell carrying the synchronization signal, the smallest subcarrier spacing in the subcarrier spacing set as the subcarrier spacing corresponding to the synchronization signal.

For example, if the subcarrier spacing set corresponding to the serving cell carrying the synchronization signal includes a 15 kHz subcarrier spacing and a 30 kHz subcarrier spacing, the network device may determine the largest subcarrier spacing, namely, the 15 kHz subcarrier spacing, in the subcarrier spacing set as the subcarrier spacing corresponding to the synchronization signal.

In still another embodiment, in step S103, the terminal determines the subcarrier spacing corresponding to the synchronization signal, where the subcarrier spacing corresponding to the synchronization signal may be the first subcarrier spacing in the subcarrier spacing set corresponding to the serving cell carrying the synchronization signal. The first subcarrier spacing is neither the smallest subcarrier spacing in the subcarrier spacing set nor the largest subcarrier spacing in the subcarrier spacing set, and may be, for example, the second largest subcarrier spacing in the subcarrier spacing set. For example, if the subcarrier spacing set corresponding to the serving cell carrying the synchronization signal includes a 15 kHz subcarrier spacing, a 30 kHz subcarrier spacing, and a 60 kHz subcarrier spacing, the network device may determine the largest subcarrier spacing, namely, the 30 kHz subcarrier spacing, in the subcarrier spacing set as the subcarrier spacing corresponding to the synchronization signal.

In this embodiment, regardless of which subcarrier spacing in the subcarrier spacing set corresponding to the serving cell is used for another channel or signal in the serving cell, the terminal detects the synchronization signal by using the same subcarrier spacing, so that the terminal does not need to perform blind detection on the synchronization signal to identify the subcarrier spacing used for the synchronization signal. This shortens a time used by the terminal to detect the synchronization signal, and shortens a time used by the terminal to synchronize with the serving cell, that is, shortens a time used by the terminal to access the serving cell; and increases a synchronization signal detection success rate of the terminal, and increases a cell access success rate of the terminal.

Different subcarrier spacings in the subcarrier spacing set corresponding to the serving cell usually may be applied to different scenarios. For example, a large subcarrier spacing is used in at least one scenario of a high-frequency low-latency service and high-speed transmission, and a small subcarrier spacing is used in at least one scenario of a low-frequency scenario and a large-coverage scenario. Therefore, in the information transmission method in this embodiment of this application, for different subcarrier spacings in the subcarrier spacing set corresponding to the serving cell, the same subcarrier spacing can be used to send the synchronization signal and/or the broadcast channel, so that a uniform synchronization signal and system information transmission method can be used in different scenarios.

In addition, when the terminal detects the synchronization signal by using the largest subcarrier spacing in the subcarrier spacing set corresponding to the serving cell, the synchronization signal can resist a Doppler shift brought by a high-speed scenario, to increase a synchronization signal detection success rate.

Step S103 may further include: The terminal determines the subcarrier spacing corresponding to the broadcast channel, where the subcarrier spacing corresponding to the broadcast channel is the same as the subcarrier spacing corresponding to the synchronization signal. For example, the subcarrier spacing corresponding to the broadcast channel may be the largest subcarrier spacing in the subcarrier spacing set corresponding to the serving cell. Other descriptions are the same as the foregoing descriptions, and details are not described herein again.

S104. The terminal detects the synchronization signal based on the subcarrier spacing corresponding to the synchronization signal.

In step S104, the terminal detects the synchronization signal based on the subcarrier spacing corresponding to the synchronization signal. Specifically, correlations between different local sequences and a received signal may be calculated, to determine a sequence corresponding to the synchronization signal. For a particular sequence, the terminal may generate a corresponding OFDM symbol based on the subcarrier spacing corresponding to the synchronization signal, calculates a correlation between the generated OFDM symbol and the received signal. Therefore, the user equipment needs to first determine the subcarrier spacing corresponding to the synchronization signal, and then detect the synchronization signal based on the subcarrier spacing corresponding to the synchronization signal.

Step S104 may further include: The terminal determines the cyclic prefix corresponding to the symbol carrying synchronization signal. In this case, the terminal may determine, based on the detected synchronization signal, the cyclic prefix corresponding to the symbol carrying synchronization signal. The cyclic prefix corresponding to the symbol carrying synchronization signal is the longest cyclic prefix in the cyclic prefixes corresponding to the subcarrier spacing corresponding to the synchronization signal.

It should be noted that, different sequences corresponding to the synchronization signal may carry different information. For example, different sequences carry different cell IDs of serving cells of the terminal. Therefore, after determining the sequence corresponding to the synchronization signal, the terminal may further determine a cell ID of the serving cell of the terminal based on the sequence corresponding to the synchronization signal. The serving cell of the terminal may be, for example, a serving cell configured by the network device for the terminal, or may be a serving cell that is serving the terminal, or a serving cell that is being accessed by the terminal.

Optionally, step S104 may include:
the terminal receives information sent by the network device; and
the terminal detects the synchronization signal based on the subcarrier spacing corresponding to the synchronization signal and the received information sent by the network device.

It should be noted that, in this case, the information sent by the network device may include the synchronization signal or may not include the synchronization signal, but in either case, the terminal performs the foregoing operation. An only difference is as follows: When the information sent by the network device does not include the synchronization signal, the terminal cannot detect the synchronization signal. When the information sent by the network device includes the synchronization signal, the terminal can detect the synchronization signal.

In the information transmission method provided in Embodiment 1 of this application, the network device may determine the largest subcarrier spacing in the subcarrier spacing set corresponding to the serving cell carrying the synchronization signal as the subcarrier spacing corresponding to the synchronization signal, and send the synchronization signal based on the subcarrier spacing corresponding to the synchronization signal; and the terminal determines the largest subcarrier spacing in the subcarrier spacing set corresponding to the serving cell carrying the synchronization signal as the subcarrier spacing corresponding to the synchronization signal, and detects the synchronization signal based on the subcarrier spacing corresponding to the synchronization signal. Different subcarrier spacings in the subcarrier spacing set corresponding to the serving cell may correspond to different application scenarios, so that the information transmission method between the terminal and the network device can be flexibly applied to different application scenarios.

Optionally, based on the foregoing information transmission method, the cyclic prefix corresponding to the symbol carrying the synchronization signal is the longest cyclic prefix in the cyclic prefixes corresponding to the subcarrier spacing corresponding to the synchronization signal.

Specifically, if the cyclic prefixes corresponding to the subcarrier spacing corresponding to the synchronization signal may include, for example, a normal cyclic prefix and an extended cyclic prefix, the cyclic prefix corresponding to the symbol carrying the synchronization signal may be the longest cyclic prefix, namely, the extended cyclic prefix, in the cyclic prefixes corresponding to the subcarrier spacing corresponding to the synchronization signal.

For example, a cyclic prefix corresponding to the synchronization signal in the serving cell and/or a cyclic prefix corresponding to the broadcast channel in the serving cell may be the longest cyclic prefix, for example, the extended cyclic prefix, in the cyclic prefixes corresponding to the subcarrier spacing corresponding to the synchronization signal.

The cyclic prefix corresponding to the synchronization signal in the serving cell and/or the cyclic prefix corresponding to the broadcast channel in the serving cell may be longer than a cyclic prefix corresponding to a data channel in the serving cell.

In the method, for example, a preset correspondence table between a subcarrier spacing and a system parameter may be searched based on the subcarrier spacing corresponding to the synchronization signal, for the cyclic prefixes corresponding to the subcarrier spacing corresponding to the synchronization signal, and the longest cyclic prefix in the cyclic prefixes corresponding to the subcarrier spacing corresponding to the synchronization signal may be determined as the cyclic prefix corresponding to the symbol carrying the synchronization signal. For example, for the correspondence table between a subcarrier spacing and a system parameter, refer to Table 1. In Table 1, system parameters corresponding to each subcarrier spacing may include a subframe length, a quantity of symbols, a CP length, CP overheads, and the like.

It should be noted that, values in Table 1 are merely examples, and the values in Table 1 may alternatively be values obtained through rounding off. For example, an effective symbol length and a CP length in this embodiment may be numbers approximate to values in the table. In addition, interdependence between the parameters in the table is not limited. CP lengths corresponding to each subcarrier spacing include two CP lengths: a CP length corresponding to a normal cyclic prefix and a CP length corresponding to an extended cyclic prefix. A smallest CP length is the CP length corresponding to the normal cyclic prefix, and a largest CP length is the CP length corresponding to the extended cyclic prefix.

**Table 1**

| | System parameter 1 | | System parameter 2 | | System parameter 3 | | System parameter 4 | |
|---|---|---|---|---|---|---|---|---|
| Subcarrier spacing (kHz) | 15 | | 30 | | 60 | | 120 | |
| Subframe length (ms) | 1 | | 0.5 | | 0.25 | | 0.125 | |
| Quantity of symbols | 14 | 12 | 14 | 12 | 14 | 12 | 14 | 12 |
| Effective symbol length (µs) | 66.67 | | 33.33 | | 16.67 | | 8.33 | |
| CP length (µs) | 4.76 | 16.67 | 2.38 | 8.33 | 1.19 | 4.17 | 0.59 | 2.09 |
| CP overheads | ∼6.7% | ∼20% | ∼6.7% | ∼20% | ∼6.7% | ∼20% | ∼6.7% | ∼20% |

If the subcarrier spacing corresponding to the synchronization signal is 30 kHz, it can be learned with reference to Table 1 that, cyclic prefixes corresponding to the 30 kHz subcarrier spacing include: a normal cyclic prefix of 2.38 µs and an extended cyclic prefix of 8.33 µs, and therefore it can be determined that the cyclic prefix corresponding to the symbol carrying the synchronization signal may be the extended cyclic prefix of 8.33 µs.

When the cyclic prefix corresponding to the data channel in the serving cell is approximately 2.38 µs or approximately 4.76 µs, the cyclic prefix corresponding to the synchronization signal in the serving cell and the cyclic prefix corresponding to the broadcast channel in the serving cell may be approximately 5.13 µs.

Herein, the cyclic prefix corresponding to the synchronization signal in the serving cell may be the cyclic prefix corresponding to the symbol carrying the synchronization signal. The cyclic prefix corresponding to the broadcast channel in the serving cell may be a cyclic prefix corresponding to a symbol carrying the broadcast channel. The cyclic prefix corresponding to the data channel in the serving cell may be a cyclic prefix corresponding to a symbol carrying data. The broadcast channel herein may be a channel for transmitting a master information block (Master Information Block, MIB).

In this manner, a coverage area of the synchronization signal in the serving cell and a coverage area of the broadcast channel in the serving cell can be expanded, and robustness of the synchronization signal in the serving cell and robustness of the broadcast channel in the serving cell can be improved.

Optionally, before that the terminal determines, based on the subcarrier spacing set corresponding to the serving cell carrying the synchronization signal, the largest subcarrier spacing in the subcarrier spacing set as the subcarrier spacing corresponding to the synchronization signal, the information transmission method may further include:
the terminal determines, based on a carrier frequency of the serving cell, the subcarrier spacing set corresponding to the serving cell; or
the terminal determines, based on a frequency set of the serving cell, the subcarrier spacing set corresponding to the serving cell.

Specifically, for example, the terminal may search a preset correspondence between a frequency set and a subcarrier spacing set based on the frequency set corresponding to the serving cell, for a subcarrier spacing set corresponding to the frequency set corresponding to the serving cell, where the subcarrier spacing set is the subcarrier spacing set corresponding to the serving cell; or the terminal may calculate a subcarrier spacing set based on the frequency set corresponding to the serving cell, and use the calculated subcarrier spacing set as the subcarrier spacing set corresponding to the serving cell. For example, the terminal may determine, as the frequency set corresponding to the serving cell, a frequency set to which the carrier frequency of the serving cell belongs; or may determine, based on a preset correspondence between a serving cell and a frequency set, the frequency set corresponding to the serving cell, for example, may determine, based on an identifier of the serving cell and a preset correspondence between an identifier of a serving cell and a frequency set, the frequency set corresponding to the serving cell.

Optionally, for example, the terminal may search a preset correspondence between a carrier frequency and a subcarrier spacing set based on the carrier frequency of the serving cell, for a subcarrier spacing set corresponding to the carrier frequency of the serving cell, where the subcarrier spacing set is the subcarrier spacing set corresponding to the serving cell; or the terminal may calculate a subcarrier spacing set based on the carrier frequency of the serving cell, and use the calculated subcarrier spacing set as the subcarrier spacing set corresponding to the serving cell. The terminal may obtain the carrier frequency of the serving cell through frequency scanning, or may obtain the carrier frequency of the serving cell based on a carrier frequency that is of a serving cell and that is preset in the terminal.

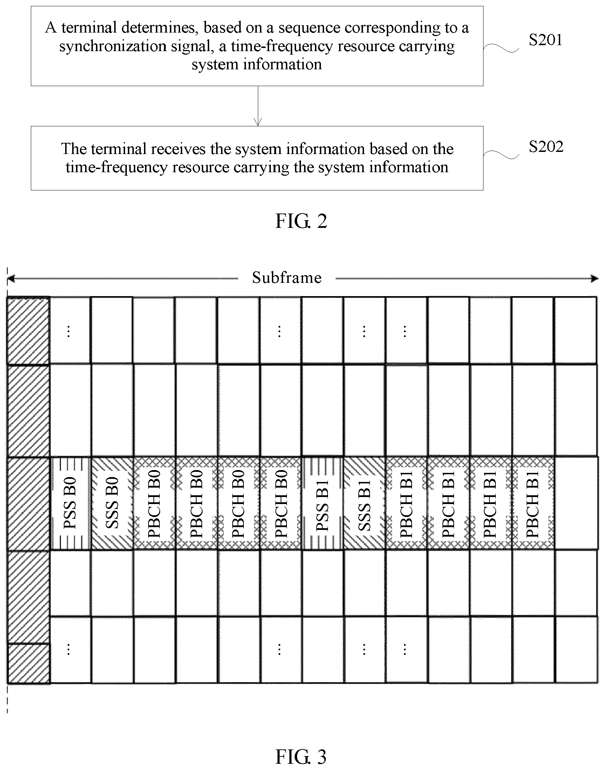

Optionally, based on any one of the foregoing methods, Embodiment 2 of this application may further provide an information transmission method. FIG. 2 is a flowchart of an information transmission method according to Embodiment 2 of this application. As shown in FIG. 2, the method may further include the following step:
S201. The terminal determines, based on a sequence corresponding to the synchronization signal, a time-frequency resource carrying system information.

Specifically, for example, the terminal may determine, based on the sequence corresponding to the detected synchronization signal and/or a preset correspondence between a synchronization signal sequence and a system information time-frequency resource, the time-frequency resource carrying the system information. After determining the time-frequency resource carrying the system information, the terminal may receive, on the time-frequency resource carrying the system information, the system information sent by the network device.

The system information may be a master information block (MIB), and a channel carrying the system information may be a physical broadcast channel.

Optionally, the system information may include a symbol location indicator field, and the symbol location indicator field is used to indicate a time domain location for carrying the synchronization signal.

For example, the symbol location indicator field may be used to indicate a location of a start symbol of the synchronization signal; or
the symbol location indicator field is used to indicate an index of a start symbol carrying the synchronization signal; or
the symbol location indicator field is used to indicate a time domain shift between a start symbol carrying the synchronization signal and a first symbol of a sub frame carrying the synchronization signal; or
the location indicator field is used to indicate a location of a start symbol carrying a primary synchronization signal; or
the symbol location indicator field is used to indicate an index of a start symbol carrying the primary synchronization signal; or
the symbol location indicator field is used to indicate a time domain shift between a start symbol carrying the primary synchronization signal and a first symbol of a subframe carrying the primary synchronization signal.

Further optionally, a scrambling code corresponding to the system information is used to indicate a subframe carrying the system information.

Optionally, based on the foregoing method, the method may further include the following step:
S202. The terminal receives the system information based on the time-frequency resource carrying the system information.

Specifically, the terminal may determine, based on the symbol location indicator field included in the system information and/or the scrambling code corresponding to the system information, the time domain location for carrying the synchronization signal. The time domain location for carrying the synchronization signal may be, for example, at least one of the location of the start symbol carrying the synchronization signal, the index of the start symbol carrying the synchronization signal, the time domain shift between the start symbol carrying the synchronization signal and the first symbol of the subframe carrying the synchronization signal, the location of the start symbol carrying the primary synchronization signal, the index of the start symbol carrying the primary synchronization signal, the time domain shift between the start symbol carrying the primary synchronization signal and the first symbol of the sub frame carrying the primary synchronization signal, and the subframe carrying the system information.

The terminal determines the time domain location for carrying the synchronization signal in a radio frame, so that the terminal can be supported in performing frame timing during multi-beam transmission, and the terminal determines radio frame timing of the serving cell.

Optionally, in the foregoing method, that the terminal determines, based on a sequence corresponding to the synchronization signal, a time-frequency resource carrying system information in S201 may include:
if the sequence corresponding to the synchronization signal is a first sequence, the terminal determines that the time-frequency resource carrying the system information is a first time-frequency resource; or
if the sequence corresponding to the synchronization signal is a second sequence, the terminal determines that the time-frequency resource carrying the system information is a second time-frequency resource.

A frequency domain location of the first time-frequency resource is the same as a frequency domain location of a time-frequency resource carrying the synchronization signal, or a frequency domain location of the first time-frequency resource includes a frequency domain location of a time-frequency resource carrying the synchronization signal.

A frequency domain location of the second time-frequency resource is adjacent to the frequency domain location of the time-frequency resource carrying the synchronization signal, or a frequency domain location of the second time-frequency resource and the frequency domain location of the time-frequency resource carrying the synchronization signal are separated by a fixed frequency shift.

Optionally, a quantity of resource blocks occupied by the first time-frequency resource location is the same as a quantity of resource blocks occupied by the time-frequency resource carrying the synchronization signal; and/or a quantity of resource blocks occupied by the second time-frequency resource location is the same as the quantity of resource blocks occupied by the time-frequency resource carrying the synchronization signal.

Optionally, a start symbol of the first time-frequency resource is adjacent to a last symbol carrying the synchronization signal; or a start symbol of the first time-frequency resource is a next symbol of a last symbol carrying the synchronization signal; or if a last symbol carrying the synchronization signal is a symbol *l*, a start symbol of the first time-frequency resource is a symbol (*l*+1) or a symbol (*l*+1)mod *L*, where *l*=0,1,···*L-*1, *L* is a positive integer, and mod is a modulo function.

A symbol of the second time-frequency resource is the same as the symbol carrying the synchronization signal; or a start symbol of the second time-frequency resource is the same as the start symbol carrying the primary synchronization signal included in the synchronization signal.

Optionally, a quantity of time domain symbols occupied by the first time-frequency resource is the same as a quantity of symbols occupied by the time-frequency resource carrying the synchronization signal. Alternatively, a quantity of time domain symbols occupied by the first time-frequency resource is twice a quantity of symbols occupied by the time-frequency resource carrying the synchronization signal.

Optionally, that a frequency domain location of the second time-frequency resource is adjacent to the frequency domain location of the time-frequency resource carrying the synchronization signal may specifically include:
the frequency domain location of the second time-frequency resource is adjacent to the frequency domain location of the time-frequency resource carrying the synchronization signal, and is distributed on two sides of the frequency domain location of the time-frequency resource carrying the synchronization signal.

For example, the second time-frequency resource may include a third time-frequency resource and a fourth time-frequency resource, a frequency domain location of the third time-frequency resource and a frequency domain location of the fourth time-frequency resource are both adjacent to the frequency domain location of the time-frequency resource carrying the synchronization signal, and are distributed on the two sides of the frequency domain location corresponding to the time-frequency resource carrying the synchronization signal. A quantity of resource blocks occupied by the third time-frequency resource may be the same as a quantity of resource blocks occupied by the fourth time-frequency resource.

For example, the frequency domain location of the third time-frequency resource may be larger than a maximum frequency domain location of the time-frequency resource carrying the synchronization signal, and the frequency domain location of the fourth time-frequency resource may be smaller than a minimum frequency domain location of the time-frequency resource carrying the synchronization signal. Alternatively, for example, the frequency domain location of the fourth time-frequency resource may be larger than a maximum frequency domain location of the time-frequency resource carrying the synchronization signal, and the frequency domain location of the third time-frequency resource may be smaller than a minimum frequency domain location of the time-frequency resource carrying the synchronization signal.

Further optionally, a sum of the quantity of resource blocks occupied by the third time-frequency resource and the quantity of resource blocks occupied by the fourth time-frequency resource may be the same as the quantity of resource blocks occupied by the time-frequency resource carrying the synchronization signal.

Alternatively, that the terminal determines, based on a sequence corresponding to the synchronization signal, a time-frequency resource carrying system information in S201 may include:
if the sequence corresponding to the synchronization signal is a first sequence, the terminal determines that the time-frequency resource carrying the system information is a first time-frequency resource; or
if the sequence corresponding to the synchronization signal is a second sequence, the terminal determines that the time-frequency resource carrying the system information is a second time-frequency resource.

The first time-frequency resource and a time-frequency resource carrying the synchronization signal are subject to time division multiplexing, and the second time-frequency resource and the time-frequency resource carrying the synchronization signal are subject to frequency division multiplexing.

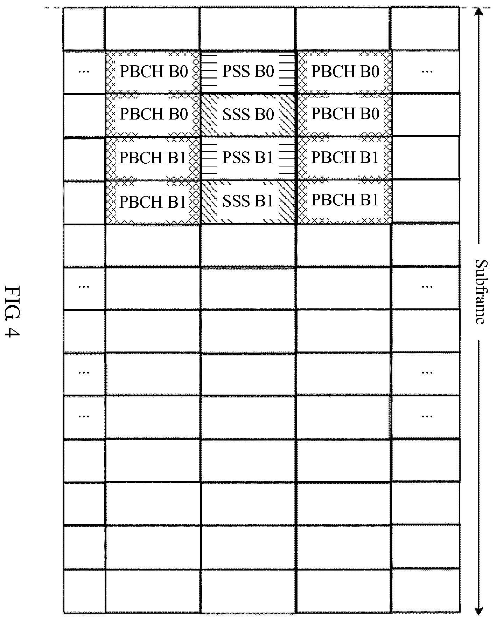

For example, FIG. 3 is a diagram of a correspondence between the first time-frequency resource and the time-frequency resource carrying the synchronization signal. FIG. 4 is a diagram of a correspondence between the second time-frequency resource and the time-frequency resource carrying the synchronization signal.

As shown in FIG. 3, if the sequence corresponding to the synchronization signal is the first sequence, the time-frequency resource carrying the system information is the first time-frequency resource. The first time-frequency resource may be a time-frequency resource corresponding to a physical broadcast channel (Physical Broadcast Channel, PBCH) in FIG. 3, for example, a time-frequency resource corresponding to a PBCH B0, or a time-frequency resource corresponding to a PBCH B1. The time-frequency resource carrying the synchronization signal is a time-frequency resource corresponding to a secondary synchronization signal (Secondary Synchronization Signal, SSS) in FIG. 3, for example, a time-frequency resource corresponding to an SSS B0, or a time-frequency resource corresponding to an SSS B1. In FIG. 3, B0 and B1 may respectively correspond to transmission beams of different terminals. For one terminal, a same beam, for example, the beam B0 or the beam B1, may be used for the system information and the synchronization signal. The system information may be carried on the PBCH for transmission. In FIG. 3, the time-frequency resource corresponding to the PBCH B0 and the time-frequency resource corresponding to the SSS B0 may be respectively located in different symbols of a same subframe, in other words, the time-frequency resource corresponding to the PBCH B0 and the time-frequency resource corresponding to the SSS B0 may be subject to time division multiplexing; and the time-frequency resource corresponding to the PBCH B1 and the time-frequency resource corresponding to the SSS B1 may be respectively located in different symbols of a same subframe, in other words, the time-frequency resource corresponding to the PBCH B1 and the time-frequency resource corresponding to the SSS B1 may be subject to time division multiplexing.

As shown in FIG. 4, if the sequence corresponding to the synchronization signal is the second sequence, the time-frequency resource carrying the system information is the second time-frequency resource. The second time-frequency resource may be a time-frequency resource corresponding to a PBCH in FIG. 4, for example, a time-frequency resource corresponding to a PBCH B0, or a time-frequency resource corresponding to a PBCH B1. The time-frequency resource carrying the synchronization signal is a time-frequency resource corresponding to an SSS in FIG. 4, for example, a time-frequency resource corresponding to an SSS B0, or a time-frequency resource corresponding to an SSS B1. In FIG. 4, B0 and B1 may respectively correspond to transmission beams of different terminals. For one terminal, a same beam, for example, the beam B0 or the beam B1, may be used for the system information and the synchronization signal. The system information may be carried on the PBCH for transmission. In FIG. 4, the time-frequency resource corresponding to the PBCH B0 and the time-frequency resource corresponding to the SSS B0 may be respectively located at different frequency domain locations of a same symbol of a same subframe, in other words, the time-frequency resource corresponding to the PBCH B0 and the time-frequency resource corresponding to the SSS B0 may be subject to frequency division multiplexing; and the time-frequency resource corresponding to the PBCH B1 and the time-frequency resource corresponding to the SSS B1 may be respectively located at different frequency domain locations of a same symbol of a same subframe, in other words, the time-frequency resource corresponding to the PBCH B1 and the time-frequency resource corresponding to the SSS B1 may be subject to frequency division multiplexing.

It can be learned with reference to FIG. 3 and FIG. 4 that, when a system uses a multi-beam transmission manner, if the sequence corresponding to the synchronization signal is the first sequence, the time-frequency resource carrying the system information is the first time-frequency resource, and the first time-frequency resource and the time-frequency resource carrying the synchronization signal are subject to time division multiplexing, so that the first time-frequency resource and the time-frequency resource carrying the synchronization signal can occupy a relatively large quantity of time domain symbols, for example, occupy a plurality of sub frames; or when a system uses a multi-beam transmission manner, if the sequence corresponding to the synchronization signal is the second sequence, the time-frequency resource carrying the system information is the second time-frequency resource, and the second time-frequency resource and the time-frequency resource carrying the synchronization signal are subject to frequency division multiplexing, so that the second time-frequency resource and the time-frequency resource carrying the synchronization signal can occupy a relatively small quantity of time domain symbols, for example, occupy a relatively small quantity of subframes.

In a dynamic time division duplex (Time Division Duplex, TDD) mechanism, a transmission direction may be dynamically changed in a subframe or a transmission unit, in other words, the subframe or the transmission unit may be dynamically applied to uplink data transmission or downlink data transmission, so that a current service requirement can be better matched. For example, if downlink services are more than uplink services in current services, most subframes may be dynamically switched to downlink data transmission, so that faster and better transmission can be achieved for the downlink services, to improve system spectrum efficiency, and reduce a downlink packet latency. In the information transmission method in this embodiment of this application, it may be determined, based on the sequence corresponding to the synchronization signal, that the time-frequency resource carrying the system information is the first time-frequency resource or the second time-frequency resource, and the second time-frequency resource may be used to transmit the system information, instead of fixedly using the first time-frequency resource to transmit the system information, to avoid a case in which time-frequency resources occupied by synchronization signals and system information that correspond to a plurality of beams occupy a large quantity of time domain symbols. This minimizes a quantity of fixed downlink symbols in one radio frame, and maximally ensures that enough time domain symbols or subframes can be flexibly switched between uplink and downlink to better support dynamic TDD.

Forward compatibility requires that a subframe in a radio frame or a frequency domain block in a serving cell can be flexibly occupied by a future service without affecting a terminal in an existing system. In the method, it may be determined, based on the sequence corresponding to the synchronization signal, that the time-frequency resource carrying the system information is the first time-frequency resource or the second time-frequency resource, and the second time-frequency resource may be used to transmit the system information, instead of fixedly using the first time-frequency resource to transmit the system information. This minimizes a quantity of time domain symbols or subframes occupied by time-frequency resources occupied by a synchronization signal and system information in one radio frame, and maximally supports forward compatibility, so that an NR system better and more flexibly supports forward compatibility.

In the method, for each beam, a manner in which time-frequency resources carrying a synchronization signal and system information that correspond to each beam are subject to time division multiplexing is not fixedly used. Therefore, during multi-beam transmission, the second time-frequency resource may be used to transmit the system information, so that time-frequency resources occupied by synchronization signals corresponding to a plurality of beams are adjacent in time domain, to achieve faster scanning of the synchronization signals of all the beams, and shorten a cell access time of the terminal.

In addition, in the method, for each beam, a manner in which time-frequency resources carrying a synchronization signal and system information that correspond to each beam are subject to frequency division multiplexing is not fixedly used, so that occupation of excessive frequency domain resources can be avoided. The NR system needs to support access of terminals with different bandwidth capabilities. Some terminals with a low bandwidth capability may use the manner in which time-frequency resources carrying a synchronization signal and system information that correspond to each beam are subject to time division multiplexing, and transmit the system information by using the first time-frequency resource, instead of fixedly using the second time-frequency resource to transmit the system information. This minimizes bandwidth carrying the synchronization signal and the system information, to effectively support terminals with different bandwidth capabilities in accessing a cell.

Therefore, in this embodiment of this application, it is determined, based on the sequence corresponding to the synchronization signal, that the time-frequency resource carrying the system information is the first time-frequency resource or the second time-frequency resource, so that the system can flexibly use, depending on an actual application scenario and an actual requirement, the first time-frequency resource and/or the second time-frequency resource to carry the system information, to better support dynamic TDD, better support forward compatibility, and better support multi-beam transmission.

Optionally, the foregoing first sequence may be generated in a first combination manner by using two 31-length sequences, and the second sequence is generated in a second combination manner by using the two 31-length sequences. The first combination manner is different from the second combination manner.

Specifically, each 31-length sequence may be a binary sequence with a length of 31 bits.

The first sequence and the second sequence may be sequences generated in different combination manners by using same two sequences. The first combination manner is different from the second combination manner.

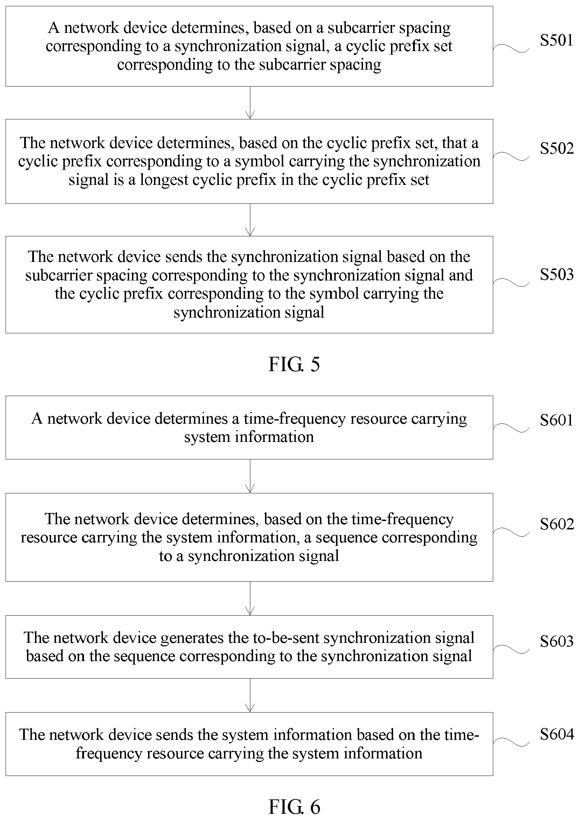

Optionally, Embodiment 2 of this application may further provide an information transmission method. FIG. 5 is a flowchart of another information transmission method according to Embodiment 2 of this application. As shown in FIG. 5, in the foregoing information transmission method, before the network device sends the synchronization signal based on the subcarrier spacing corresponding to the synchronization signal in S102, the method may include the following steps.

S501. The network device determines, based on the subcarrier spacing corresponding to the synchronization signal, a cyclic prefix set corresponding to the subcarrier spacing.

S502. The network device determines, based on the cyclic prefix set, that a cyclic prefix corresponding to a symbol carrying the synchronization signal is a longest cyclic prefix in the cyclic prefix set.

Specifically, the cyclic prefix set corresponding to the subcarrier spacing may include at least one cyclic prefix, and the network device may determine that the cyclic prefix corresponding to the symbol carrying the synchronization signal is the longest cyclic prefix in the cyclic prefix set. The cyclic prefix set may include, for example, a normal cyclic prefix and an extended cyclic prefix, and the longest cyclic prefix in the cyclic prefix set may be, for example, the extended cyclic prefix.

Optionally, that the network device sends the synchronization signal based on the subcarrier spacing corresponding to the synchronization signal in S102 may include the following step:
S503. The network device sends the synchronization signal based on the subcarrier spacing corresponding to the synchronization signal and the cyclic prefix corresponding to the symbol carrying the synchronization signal.

Specifically, the network device may generate the symbol corresponding to the synchronization signal based on the subcarrier spacing corresponding to the synchronization signal and the cyclic prefix corresponding to the symbol carrying the synchronization signal, and send the synchronization signal based on the symbol corresponding to the synchronization signal.

Optionally, a subcarrier spacing corresponding to a symbol carrying the system information is the same as the subcarrier spacing carrying the synchronization signal.

Optionally, based on any one of the foregoing information transmission methods, Embodiment 2 of this application further provides an information transmission method. FIG. 6 is a flowchart of still another information transmission method according to Embodiment 2 of this application. As shown in FIG. 6, the method may further include the following steps.

S601. A network device determines a time-frequency resource carrying system information.

Specifically, the network device may determine, based on a current application scenario, that the time-frequency resource carrying the system information is a first time-frequency resource or a second time-frequency resource. The first time-frequency resource and the second time-frequency resource are time-frequency resources at different time-frequency locations.

For example, when the application scenario is a dynamic TDD scenario, the network device may determine the second time-frequency resource as the time-frequency resource carrying the system information; when the application scenario requires forward compatibility to be supported in time domain, the network device may determine the second time-frequency resource as the time-frequency resource carrying the system information; or when there is a user with a low bandwidth capability in a system, the network device may determine the first time-frequency resource as the time-frequency resource carrying the system information.

S602. The network device determines, based on the time-frequency resource carrying the system information, a sequence corresponding to the synchronization signal.

Specifically, for different time-frequency resources carrying the system information, the network device may determine, based on S101, different sequences corresponding to the synchronization signal. For example, the network device may determine, based on the time-frequency resource carrying the system information and a preset correspondence between a system information time-frequency resource and a synchronization signal sequence, that a synchronization signal sequence corresponding to the time-frequency resource carrying the system information is the sequence corresponding to the synchronization signal, namely, a sequence corresponding to a to-be-sent synchronization signal.

Optionally, the method may further include the following step:
S603. The network device generates the to-be-sent synchronization signal based on the sequence corresponding to the synchronization signal.

Specifically, different sequences corresponding to the synchronization signal may carry different information. For example, different sequences carry different cell identity (Identity, ID) information of serving cells of the terminal.

Optionally, in the foregoing information transmission method, the method may further include the following step:
S604. The network device sends the system information based on the time-frequency resource carrying the system information.

The system information may be a master information block (MIB), and a channel carrying the system information may be a physical broadcast channel.

Optionally, the system information may include a symbol location indicator field, and the symbol location indicator field is used to indicate a time domain location for carrying the synchronization signal.

For example, the symbol location indicator field may be used to indicate a location of a start symbol of the synchronization signal; or
the symbol location indicator field is used to indicate an index of a start symbol carrying the synchronization signal; or
the symbol location indicator field is used to indicate a time domain shift between a start symbol carrying the synchronization signal and a first symbol of a sub frame carrying the synchronization signal; or
the location indicator field is used to indicate a location of a start symbol carrying a primary synchronization signal; or
the symbol location indicator field is used to indicate an index of a start symbol carrying the primary synchronization signal; or
the symbol location indicator field is used to indicate a time domain shift between a start symbol carrying the primary synchronization signal and a first symbol of a subframe carrying the primary synchronization signal.

Further optionally, a scrambling code corresponding to the system information is used to indicate a subframe carrying the system information.

Optionally, that the network device determines, based on the time-frequency resource carrying the system information, a sequence corresponding to the synchronization signal in S602 may include:
if the time-frequency resource carrying the system information is a first time-frequency resource, the network device determines that the sequence corresponding to the synchronization signal is a first sequence; or
if the time-frequency resource carrying the system information is a second time-frequency resource, the network device determines that the sequence corresponding to the synchronization signal is a second sequence.

A frequency domain location of the first time-frequency resource is the same as a frequency domain location of a time-frequency resource carrying the synchronization signal, or a frequency domain location of the first time-frequency resource includes a frequency domain location of a time-frequency resource carrying the synchronization signal.

A frequency domain location of the second time-frequency resource is adjacent to the frequency domain location of the time-frequency resource carrying the synchronization signal, or a frequency domain location of the second time-frequency resource and the frequency domain location of the time-frequency resource carrying the synchronization signal are separated by a fixed frequency shift.

Optionally, a quantity of resource blocks occupied by the first time-frequency resource is the same as a quantity of resource blocks occupied by the time-frequency resource carrying the synchronization signal; and/or a quantity of resource blocks occupied by the second time-frequency resource is the same as the quantity of resource blocks occupied by the time-frequency resource carrying the synchronization signal.

Optionally, a start symbol of the first time-frequency resource is adjacent to a last symbol carrying the synchronization signal; or a start symbol corresponding to the first time-frequency resource is a next symbol of a last symbol carrying the synchronization signal; or if a last symbol carrying the synchronization signal is a symbol *l*, a start symbol of the first time-frequency resource is a symbol (*l*+1) or a symbol (*l*+1)mod *L*, where *l*=0,1,···*L-*1*, L* is a positive integer, and mod is a modulo function.

A symbol of the second time-frequency resource is the same as a symbol carrying the synchronization signal; or a start symbol of the second time-frequency resource is the same as the start symbol carrying the primary synchronization signal included in the synchronization signal.

Further optionally, a quantity of time domain symbols occupied by the first time-frequency resource is the same as a quantity of symbols occupied by the time-frequency resource carrying the synchronization signal. Alternatively, a quantity of time domain symbols occupied by the first time-frequency resource is twice a quantity of symbols occupied by the time-frequency resource carrying the synchronization signal.

Further optionally, the frequency domain location of the second time-frequency resource is adjacent to the frequency domain location corresponding to the time-frequency resource carrying the synchronization signal, and is distributed on two sides of the frequency domain location corresponding to the time-frequency resource carrying the synchronization signal.

For example, the second time-frequency resource may include a third time-frequency resource and a fourth time-frequency resource, a frequency domain location of the third time-frequency resource and a frequency domain location of the fourth time-frequency resource are both adjacent to the frequency domain location of the time-frequency resource carrying the synchronization signal, and are distributed on the two sides of the frequency domain location corresponding to the time-frequency resource carrying the synchronization signal. A quantity of resource blocks occupied by the third time-frequency resource may be the same as a quantity of resource blocks occupied by the fourth time-frequency resource.

For example, the frequency domain location of the third time-frequency resource may be larger than a maximum frequency domain location of the time-frequency resource carrying the synchronization signal, and the frequency domain location of the fourth time-frequency resource may be smaller than a minimum frequency domain location of the time-frequency resource carrying the synchronization signal. Alternatively, for example, the frequency domain location of the fourth time-frequency resource may be larger than a maximum frequency domain location of the time-frequency resource carrying the synchronization signal, and the frequency domain location of the third time-frequency resource may be smaller than a minimum frequency domain location of the time-frequency resource carrying the synchronization signal.

Further optionally, a sum of the quantity of resource blocks occupied by the third time-frequency resource and the quantity of resource blocks occupied by the fourth time-frequency resource may be the same as the quantity of resource blocks occupied by the time-frequency resource carrying the synchronization signal.

Alternatively, that the network device determines, based on the time-frequency resource carrying the system information, a sequence corresponding to the synchronization signal in S602 may include:
if the time-frequency resource carrying the system information is a first time-frequency resource, the network device determines that the sequence corresponding to the synchronization signal is a first sequence; or
if the time-frequency resource carrying the system information is a second time-frequency resource, the network device determines that the sequence corresponding to the synchronization signal is a second sequence.

The first time-frequency resource and a time-frequency resource carrying the synchronization signal are subject to time division multiplexing, and the second time-frequency resource and the time-frequency resource carrying the synchronization signal are subject to frequency division multiplexing.

It should be noted that, for detailed descriptions of the first time-frequency resource and the second time-frequency resource, reference may be made to the foregoing descriptions, and details are not described herein again. The terminal determines the time domain location for carrying the synchronization signal in a radio frame, so that the terminal can be supported in performing frame timing during multi-beam transmission, and the terminal determines radio frame timing of the serving cell.

In the information transmission methods provided in Embodiment 2 of this application, it is determined, based on the sequence corresponding to the synchronization signal, that the time-frequency resource carrying the system information is the first time-frequency resource or the second time-frequency resource, so that the system can flexibly use, depending on an actual application scenario and an actual requirement, the first time-frequency resource and/or the second time-frequency resource to carry the system information, to better support dynamic TDD, better support forward compatibility, and better support multi-beam transmission. In addition, the system information includes the symbol location indicator field and/or the scrambling code corresponding to the system information indicates the subframe carrying the system information, so that the terminal can be supported in performing frame timing during multi-beam transmission, that is, determining the time domain location for carrying the synchronization signal in a radio frame, to determine radio frame timing of the serving cell.

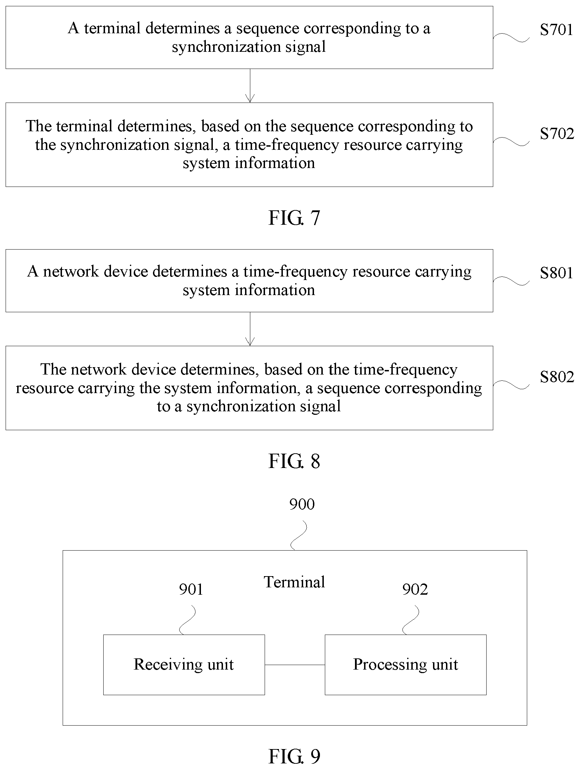

Embodiment 3 of this application further provides an information transmission method. FIG. 7 is a flowchart of an information transmission method according to Embodiment 3 of this application. As shown in FIG. 7, the method may include the following steps.

S701. A terminal determines a sequence corresponding to a synchronization signal.

Specifically, for example, the terminal may determine, in the manner in S104 in the foregoing embodiment or another similar manner, the sequence corresponding to the synchronization signal.

Optionally, step S701 may further include:
the terminal receives the synchronization signal sent by a network device; and
the terminal determines, based on the received synchronization signal sent by the network device, the sequence corresponding to the synchronization signal.

Further optionally, that the terminal receives the synchronization signal sent by a network device may include:
the terminal receives information sent by the network device; and
the terminal detects the synchronization signal based on the received information sent by the network device.

It should be noted that, in this case, the information sent by the network device may include the synchronization signal or may not include the synchronization signal, but in either case, the terminal performs the foregoing operation. An only difference is as follows: When the information sent by the network device does not include the synchronization signal, the terminal cannot detect the synchronization signal. When the information sent by the network device includes the synchronization signal, the terminal can detect the synchronization signal.

S702. The terminal determines, based on the sequence corresponding to the synchronization signal, a time-frequency resource carrying system information.

Specifically, for a specific implementation process of S701, refer to the foregoing descriptions of S201, and details are not described herein again.

Optionally, that the terminal determines, based on the sequence corresponding to the synchronization signal, a time-frequency resource carrying system information in S702 may include:
if the sequence corresponding to the synchronization signal is a first sequence, the time-frequency resource carrying the system information is a first time-frequency resource; or
if the sequence corresponding to the synchronization signal is a second sequence, the time-frequency resource carrying the system information is a second time-frequency resource.

A frequency domain location of the first time-frequency resource is the same as a frequency domain location of a time-frequency resource carrying the synchronization signal, or a frequency domain location corresponding to the first time-frequency resource includes a frequency domain location corresponding to a time-frequency resource carrying the synchronization signal.

A frequency domain location of the second time-frequency resource is adjacent to the frequency domain location of the time-frequency resource carrying the synchronization signal, or a frequency domain location corresponding to the second time-frequency resource and the frequency domain location corresponding to the time-frequency resource carrying the synchronization signal are separated by a fixed frequency shift.

Optionally, in the foregoing information transmission manner, a start symbol of the first time-frequency resource is adjacent to a last symbol carrying the synchronization signal; or a start symbol of the first time-frequency resource is a next symbol of a last symbol carrying the synchronization signal; or if a last symbol carrying the synchronization signal is a symbol *l*, a start symbol of the first time-frequency resource is a symbol (*l*+1) or a symbol (*l*+1) mod *L,* where *l*=0,1,···*L-*1*,* and *L* is a positive integer.

A symbol of the second time-frequency resource is the same as a symbol carrying the synchronization signal; or a start symbol of the second time-frequency resource is the same as a start symbol carrying a primary synchronization signal included in the synchronization signal.

Optionally, the first sequence is generated in a first combination manner by using two 31-length sequences, the second sequence is generated in a second combination manner by using the two 31-length sequences, and the first combination manner is different from the second combination manner.

In the information transmission method, the terminal may determine the sequence corresponding to the synchronization signal, and determine, based on the sequence corresponding to the synchronization signal, the time-frequency resource carrying the system information. Different time-frequency resources carrying the system information may correspond to different application scenarios, so that different sequences corresponding to the synchronization signal may correspond to different application scenarios, and therefore the information transmission method between the terminal and the network device can be flexibly applied to different application scenarios.

Embodiment 3 of this application further provides an information transmission method. FIG. 8 is a flowchart of another information transmission method according to Embodiment 3 of this application. As shown in FIG. 8, the method may include the following steps.

S801. A network device determines a time-frequency resource carrying system information.

Specifically, for a specific implementation process of S801, refer to the foregoing descriptions of S601, and details are not described herein again.

S802. The network device determines, based on the time-frequency resource carrying the system information, a sequence corresponding to the synchronization signal.

Specifically, for a specific implementation process of S802, refer to the foregoing descriptions of S602, and details are not described herein again.

Optionally, that the network device determines, based on the time-frequency resource carrying the system information, a sequence corresponding to the synchronization signal in S802 may include:
if the time-frequency resource carrying the system information is a first time-frequency resource, the network device determines that the sequence corresponding to the synchronization signal is a first sequence; or
if the time-frequency resource carrying the system information is a second time-frequency resource, the network device determines that the sequence corresponding to the synchronization signal is a second sequence.

A frequency domain location of the first time-frequency resource is the same as a frequency domain location of a time-frequency resource carrying the synchronization signal, or a frequency domain location of the first time-frequency resource includes a frequency domain location of a time-frequency resource carrying the synchronization signal.

A frequency domain location of the second time-frequency resource is adjacent to the frequency domain location of the time-frequency resource carrying the synchronization signal, or a frequency domain location of the second time-frequency resource and the frequency domain location of the time-frequency resource carrying the synchronization signal are separated by a fixed frequency shift.

Optionally, a start symbol of the first time-frequency resource is adjacent to a last symbol carrying the synchronization signal; or a start symbol of the first time-frequency resource is a next symbol of a last symbol carrying the synchronization signal; or if a last symbol carrying the synchronization signal is a symbol *l*, a start symbol of the first time-frequency resource is a symbol (*l*+1) or a symbol (*l*+1)mod *L*, where *l*=0,1,···*L-1,* and *L* is a positive integer.

A symbol of the second time-frequency resource is the same as a symbol carrying the synchronization signal; or a start symbol of the second time-frequency resource is the same as a start symbol carrying a primary synchronization signal included in the synchronization signal.

Alternatively, that the network device determines, based on the time-frequency resource carrying the system information, a sequence corresponding to the synchronization signal in S802 may include:
if the time-frequency resource carrying the system information is a first time-frequency resource, the network device determines that the sequence corresponding to the synchronization signal is a first sequence; or
if the time-frequency resource carrying the system information is a second time-frequency resource, the network device determines that the sequence corresponding to the synchronization signal is a second sequence.

The first time-frequency resource and a time-frequency resource carrying the synchronization signal are subject to time division multiplexing, and the second time-frequency resource and the time-frequency resource carrying the synchronization signal are subject to frequency division multiplexing.

Optionally, the first sequence is generated in a first combination manner by using two 31-length sequences, the second sequence is generated in a second combination manner by using the two 31-length sequences, and the first combination manner is different from the second combination manner.

In the information transmission method, the network device may determine the time-frequency resource carrying the system information, and determine, based on the time-frequency resource carrying the system information, the sequence corresponding to the synchronization signal. Different time-frequency resources carrying the system information may correspond to different application scenarios, so that different sequences corresponding to the synchronization signal may correspond to different application scenarios, and therefore the information transmission method between a terminal and the network device can be flexibly applied to different application scenarios.

Embodiment 4 of this application further provides a terminal. FIG. 9 is a schematic structural diagram of a terminal according to Embodiment 4 of this application. As shown in FIG. 9, the terminal 900 may include: a receiving unit 901 and a processing unit 902. The receiving unit 901 may be implemented by a receiver of the terminal 900.

For example, the processing unit 902 may be implemented by a processor of the terminal 900 by using software and/or software.

The processor of the terminal 900 may be a central processing unit (Central Processing Unit, CPU). The processor may alternatively be another general purpose processor, a digital signal processor (Digital Signal Processor, DSP), an application-specific integrated circuit (Application-specific Integrated Circuit, ASIC), a field-programmable gate array (Field-Programmable Gate Array, FPGA) or another programmable logic device, a discrete gate or a transistor logic device, a discrete hardware component, or the like. The general purpose processor may be a microprocessor, or the processor may be any conventional processor or the like.

The receiver may be a receive interface circuit, configured to receive a signal. In addition, the receiver may communicate with another network and/or terminal through wireless communication.

The processing unit 902 may be configured to: perform S103 in the information transmission method in the foregoing embodiment to determine a subcarrier spacing corresponding to a synchronization signal, where the subcarrier spacing corresponding to the synchronization signal is a largest subcarrier spacing in a subcarrier spacing set corresponding to a serving cell carrying the synchronization signal; and perform S104 to detect the synchronization signal based on the subcarrier spacing corresponding to the synchronization signal and the received information sent by a network device.

Optionally, a cyclic prefix corresponding to a symbol carrying the synchronization signal is a longest cyclic prefix in cyclic prefixes corresponding to the subcarrier spacing corresponding to the synchronization signal.

Optionally, the processing unit 902 is further configured to perform S201 in the foregoing information transmission method to determine, based on a sequence corresponding to the synchronization signal, a time-frequency resource carrying system information.

Optionally, the processing unit 902 is specifically configured to: if the sequence corresponding to the synchronization signal is a first sequence, determine that the time-frequency resource carrying the system information is a first time-frequency resource; or if the sequence corresponding to the synchronization signal is a second sequence, determine that the time-frequency resource carrying the system information is a second time-frequency resource.

A frequency domain location of the first time-frequency resource is the same as a frequency domain location of a time-frequency resource carrying the synchronization signal, or a frequency domain location corresponding to the first time-frequency resource includes a frequency domain location corresponding to a time-frequency resource carrying the synchronization signal; and a frequency domain location of the second time-frequency resource is adjacent to the frequency domain location of the time-frequency resource carrying the synchronization signal, or a frequency domain location corresponding to the second time-frequency resource and the frequency domain location corresponding to the time-frequency resource carrying the synchronization signal are separated by a fixed frequency shift.

Optionally, a start symbol of the first time-frequency resource is adjacent to a last symbol carrying the synchronization signal; or
a start symbol of the first time-frequency resource is a next symbol of a last symbol carrying the synchronization signal; or
if a last symbol carrying the synchronization signal is a symbol *l*, a start symbol of the first time-frequency resource is a symbol (*l*+1) or a symbol (*l*+1) mod *L*, where *l*=0,1,···*L-*1, and *L* is a positive integer.

A symbol of the second time-frequency resource is the same as the symbol carrying the synchronization signal; or a start symbol of the second time-frequency resource is the same as a start symbol carrying a primary synchronization signal included in the synchronization signal.

Optionally, the frequency domain location of the second time-frequency resource is adjacent to the frequency domain location of the time-frequency resource carrying the synchronization signal, and is distributed on two sides of the frequency domain location of the time-frequency resource carrying the synchronization signal.

Optionally, as described above in the foregoing method, the first sequence is generated in a first combination manner by using two 31-length sequences, the second sequence is generated in a second combination manner by using the two 31-length sequences, and the first combination manner is different from the second combination manner.

Optionally, as described above in the foregoing method, the system information includes a symbol location indicator field.

The symbol location indicator field is used to indicate a location of a start symbol carrying the synchronization signal; or
the symbol location indicator field is used to indicate an index of a start symbol carrying the synchronization signal; or
the symbol location indicator field is used to indicate a time domain shift between a start symbol carrying the synchronization signal and a first symbol of a sub frame carrying the synchronization signal; or the location indicator field is used to indicate a location of the start symbol carrying the primary synchronization signal; or
the symbol location indicator field is used to indicate an index of the start symbol carrying the primary synchronization signal; or
the symbol location indicator field is used to indicate a time domain shift between the start symbol carrying the primary synchronization signal and a first symbol of a subframe carrying the primary synchronization signal.

Optionally, as described above in the foregoing method, a scrambling code corresponding to the system information is used to indicate a subframe carrying the system information.

Optionally, as described above in the foregoing method, the synchronization signal is a secondary synchronization signal.

The terminal provided in Embodiment 4 of this application may determine the largest subcarrier spacing in the subcarrier spacing set corresponding to the serving cell carrying the synchronization signal as the subcarrier spacing corresponding to the synchronization signal, and detect the synchronization signal based on the subcarrier spacing corresponding to the synchronization signal. Different subcarrier spacings in the subcarrier spacing set corresponding to the serving cell may correspond to different application scenarios, so that the information transmission method between the terminal and the network device can be flexibly applied to different application scenarios.

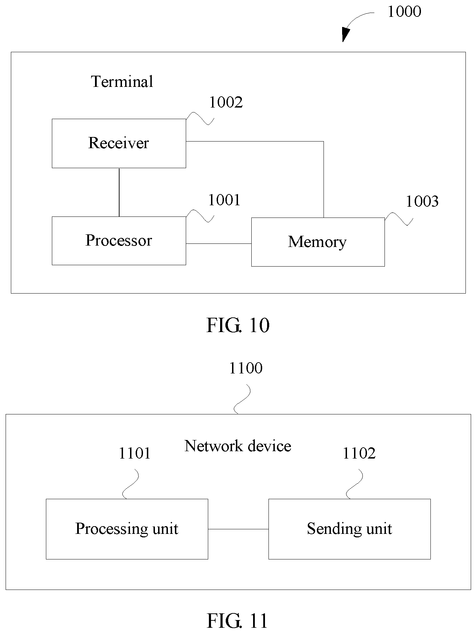

Embodiment 5 of this application further provides a terminal. FIG. 10 is a schematic structural diagram of a terminal according to Embodiment 5 of this application. As shown in FIG. 10, the terminal 1000 may include: a processor 1001 and a receiver 1002. Optionally, the processor 1001 can implement a function of the processing unit 902 in Embodiment 4, and the receiver 1002 can implement a function of the receiving unit 901 in Embodiment 4.

Optionally, the terminal 1000 may further include a memory 1003. The memory 1003 may be configured to store code and the like to be executed by the processor 1001.

The processor of the terminal 1000 may be a CPU. The processor 1001 may alternatively be another general purpose processor, a DSP, an ASIC, an FPGA or another programmable logic device, a discrete gate or a transistor logic device, a discrete hardware component, or the like. The general purpose processor may be a microprocessor, or the processor may be any conventional processor or the like.

The terminal in Embodiment 5 of this application can perform the information transmission method performed by the terminal in any one of FIG. 1, FIG. 2, and FIG. 7, beneficial effects thereof are similar to those in the foregoing embodiments, and details are not described herein again.

Embodiment 6 of this application further provides a network device. FIG. 11 is a schematic structural diagram of a network device according to Embodiment 6 of this application. As shown in FIG. 11, the network device 1100 may include: a processing unit 1101 and a sending unit 1102.

For example, the processing unit 1101 may be implemented by a processor of the network device 1100 by using software and/or software, and the sending unit 1102 may be implemented by a transmitter of the network device 1100.

The processor may be a CPU. The processor may alternatively be another general purpose processor, a DSP, an ASIC, an FPGA or another programmable logic device, a discrete gate or a transistor logic device, a discrete hardware component, or the like. The general purpose processor may be a microprocessor, or the processor may be any conventional processor or the like.

The transmitter may be a transmit interface circuit, configured to send a signal. In addition, the transmitter may communicate with another network and/or terminal through wireless communication.

The processing unit 1101 is configured to perform S101 in the information transmission method in the foregoing embodiment to determine a subcarrier spacing corresponding to a synchronization signal, where the subcarrier spacing corresponding to the synchronization signal is a largest subcarrier spacing in a subcarrier spacing set corresponding to a serving cell carrying the synchronization signal.

The sending unit 1102 is configured to perform S102 in the information transmission method in the foregoing embodiment to send the synchronization signal based on the subcarrier spacing corresponding to the synchronization signal.

Optionally, the processing unit 1101 is further configured to: perform S501 in the information transmission method in the foregoing embodiment to determine, based on the subcarrier spacing corresponding to the synchronization signal, a cyclic prefix set corresponding to the subcarrier spacing; and perform S502 in the information transmission method in the foregoing embodiment to determine, based on the cyclic prefix set, that a cyclic prefix corresponding to a symbol carrying the synchronization signal is a longest cyclic prefix in the cyclic prefix set.

Optionally, the sending unit 1102 is specifically configured to perform S503 in the information transmission method in the foregoing embodiment to send the synchronization signal based on the subcarrier spacing corresponding to the synchronization signal and the cyclic prefix corresponding to the symbol carrying the synchronization signal.

Optionally, the processing unit 1101 is further configured to: perform S601 in the information transmission method in the foregoing embodiment to determine a time-frequency resource carrying system information; and perform S602 in the information transmission method in the foregoing embodiment to determine, based on the time-frequency resource carrying the system information, a sequence corresponding to the synchronization signal.

Alternatively, the processing unit 1101 is specifically configured to: if the time-frequency resource carrying the system information is a first time-frequency resource, determine that the sequence corresponding to the synchronization signal is a first sequence; or if the time-frequency resource carrying the system information is a second time-frequency resource, determine that the sequence corresponding to the synchronization signal is a second sequence.

A frequency domain location of the first time-frequency resource is the same as a frequency domain location of a time-frequency resource carrying the synchronization signal, or a frequency domain location of the first time-frequency resource includes a frequency domain location of a time-frequency resource carrying the synchronization signal.

A frequency domain location of the second time-frequency resource is adjacent to the frequency domain location of the time-frequency resource carrying the synchronization signal, or a frequency domain location of the second time-frequency resource and the frequency domain location of the time-frequency resource carrying the synchronization signal are separated by a fixed frequency shift.

Optionally, a start symbol of the first time-frequency resource is adjacent to a last symbol carrying the synchronization signal; or
a start symbol of the first time-frequency resource is a next symbol of a last symbol carrying the synchronization signal; or
if a last symbol carrying the synchronization signal is a symbol *l*, a start symbol of the first time-frequency resource is a symbol (*l*+1) or a symbol (*l*+1) mod *L*, where *l*=0,1,···*L-*1, and *L* is a positive integer.

A symbol of the second time-frequency resource is the same as the symbol carrying the synchronization signal; or a start symbol of the second time-frequency resource is the same as a start symbol carrying a primary synchronization signal included in the synchronization signal.

Optionally, the frequency domain location of the second time-frequency resource is adjacent to the frequency domain location of the time-frequency resource carrying the synchronization signal, and is distributed on two sides of the frequency domain location of the time-frequency resource carrying the synchronization signal.

Optionally, the processing unit 1101 is specifically configured to: if the time-frequency resource carrying the system information is a first time-frequency resource, determine that the sequence corresponding to the synchronization signal is a first sequence; or if the time-frequency resource carrying the system information is a second time-frequency resource, determine that the sequence corresponding to the synchronization signal is a second sequence.

The first time-frequency resource and a time-frequency resource carrying the synchronization signal are subject to time division multiplexing, and the second time-frequency resource and the time-frequency resource carrying the synchronization signal are subject to frequency division multiplexing.

Optionally, the first sequence is generated in a first combination manner by using two 31-length sequences, the second sequence is generated in a second combination manner by using the two 31-length sequences, and the first combination manner is different from the second combination manner.

Optionally, the system information includes a symbol location indicator field.

The symbol location indicator field is used to indicate a location of a start symbol carrying the synchronization signal; or
the symbol location indicator field is used to indicate an index of a start symbol carrying the synchronization signal; or
the symbol location indicator field is used to indicate a time domain shift between a start symbol carrying the synchronization signal and a first symbol of a sub frame carrying the synchronization signal; or
the location indicator field is used to indicate a location of the start symbol carrying the primary synchronization signal; or
the symbol location indicator field is used to indicate an index of the start symbol carrying the primary synchronization signal; or
the symbol location indicator field is used to indicate a time domain shift between the start symbol carrying the primary synchronization signal and a first symbol of a subframe carrying the primary synchronization signal.

Optionally, a scrambling code corresponding to the system information is used to indicate a subframe carrying the system information.

Optionally, the synchronization signal is a secondary synchronization signal.

The network device provided in Embodiment 6 of this application may determine the largest subcarrier spacing in the subcarrier spacing set corresponding to the serving cell carrying the synchronization signal as the subcarrier spacing corresponding to the synchronization signal, and send the synchronization signal based on the subcarrier spacing corresponding to the synchronization signal. Different subcarrier spacings in the subcarrier spacing set corresponding to the serving cell may correspond to different application scenarios, so that the information transmission method between a terminal and the network device can be flexibly applied to different application scenarios.

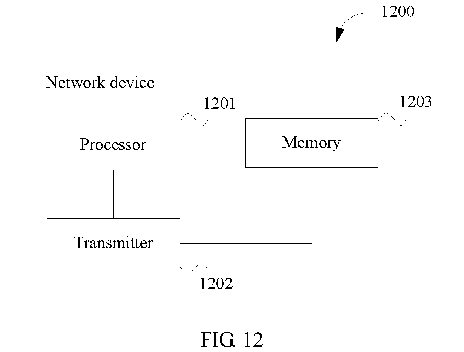

Embodiment 7 of this application further provides a network device. FIG. 12 is a schematic structural diagram of a network device according to Embodiment 7 of this application. As shown in FIG. 12, the network device 1200 may include: a processor 1201 and a transmitter 1202. Optionally, the processor 1201 can implement a function of the processing unit 1101 in Embodiment 6, and the transmitter 1202 can implement a function of the sending unit 1102 in Embodiment 6.

Optionally, the network device 1200 may further include a memory 1203. The memory 1203 may be configured to store code and the like to be executed by the processor 1201.

The processor 1201 of the network device 1200 may be a CPU. The processor 1201 may alternatively be another general purpose processor, a DSP, an ASIC, an FPGA or another programmable logic device, a discrete gate or a transistor logic device, a discrete hardware component, or the like. The general purpose processor may be a microprocessor, or the processor may be any conventional processor or the like.

The terminal in Embodiment 7 of this application can perform the information transmission method performed by the network device in any one of FIG. 1, FIG. 5, FIG. 6, and FIG. 8, beneficial effects thereof are similar to those in the foregoing embodiments, and details are not described herein again.

In addition, functional units in the embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in the form of a software function unit and sold or used as an independent product, the integrated unit may be stored in a computer-readable storage medium. Based on such an understanding, the technical solutions of this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods described in the embodiments of this application. The foregoing storage medium includes various media that can store program code, such as a USB flash drive, a removable hard disk, a read-only memory (ROM, Read-Only Memory), a random access memory (RAM, Random Access Memory), a magnetic disk, or an optical disc.

## Claims

1. An information transmission method, comprising:
determining, by a terminal, a subcarrier spacing corresponding to a synchronization signal, wherein the subcarrier spacing corresponding to the synchronization signal is a largest subcarrier spacing in a subcarrier spacing set corresponding to a serving cell carrying the synchronization signal; and
detecting, by the terminal, the synchronization signal based on the subcarrier spacing corresponding to the synchronization signal.

2. The method according to claim 1, wherein a cyclic prefix corresponding to a symbol carrying the synchronization signal is a longest cyclic prefix in cyclic prefixes corresponding to the subcarrier spacing corresponding to the synchronization signal.

3. The method according to claim 1 or 2, wherein the method further comprises: determining, by the terminal based on a sequence corresponding to the synchronization signal, a time-frequency resource carrying system information.

4. The method according to claim 3, wherein the determining, by the terminal based on a sequence corresponding to the synchronization signal, a time-frequency resource carrying system information comprises:
if the sequence corresponding to the synchronization signal is a first sequence, determining, by the terminal, that the time-frequency resource carrying the system information is a first time-frequency resource; or
if the sequence corresponding to the synchronization signal is a second sequence, determining, by the terminal, that the time-frequency resource carrying the system information is a second time-frequency resource, wherein
a frequency domain location of the first time-frequency resource is the same as a frequency domain location of a time-frequency resource carrying the synchronization signal, or a frequency domain location corresponding to the first time-frequency resource comprises a frequency domain location corresponding to a time-frequency resource carrying the synchronization signal; and
a frequency domain location of the second time-frequency resource is adjacent to the frequency domain location of the time-frequency resource carrying the synchronization signal, or a frequency domain location corresponding to the second time-frequency resource and the frequency domain location corresponding to the time-frequency resource carrying the synchronization signal are separated by a fixed frequency shift.

5. The method according to claim 4, wherein
a start symbol of the first time-frequency resource is adjacent to a last symbol carrying the synchronization signal; or a start symbol of the first time-frequency resource is a next symbol of a last symbol carrying the synchronization signal; or if a last symbol carrying the synchronization signal is a symbol *l*, a start symbol of the first time-frequency resource is a symbol (*l*+1) or a symbol (*l*+1) mod *L*, wherein *l*=0,1,···*L-*1, and *L* is a positive integer; and
a symbol of the second time-frequency resource is the same as the symbol carrying the synchronization signal; or a start symbol of the second time-frequency resource is the same as a start symbol carrying a primary synchronization signal comprised in the synchronization signal.

6. The method according to claim 4 or 5, wherein that a frequency domain location of the second time-frequency resource is adjacent to the frequency domain location of the time-frequency resource carrying the synchronization signal comprises:
the frequency domain location of the second time-frequency resource is adjacent to the frequency domain location of the time-frequency resource carrying the synchronization signal, and is distributed on two sides of the frequency domain location of the time-frequency resource carrying the synchronization signal.

7. The method according to any one of claims 4 to 6, wherein the first sequence is generated in a first combination manner by using two 31-length sequences, the second sequence is generated in a second combination manner by using the two 31-length sequences, and the first combination manner is different from the second combination manner.

8. The method according to any one of claims 3 to 7, wherein
the system information comprises a symbol location indicator field; and
the symbol location indicator field is used to indicate a location of a start symbol carrying the synchronization signal; or the symbol location indicator field is used to indicate an index of a start symbol carrying the synchronization signal; or the symbol location indicator field is used to indicate a time domain shift between a start symbol carrying the synchronization signal and a first symbol of a subframe carrying the synchronization signal; or the location indicator field is used to indicate a location of the start symbol carrying the primary synchronization signal; or the symbol location indicator field is used to indicate an index of the start symbol carrying the primary synchronization signal; or the symbol location indicator field is used to indicate a time domain shift between the start symbol carrying the primary synchronization signal and a first symbol of a sub frame carrying the primary synchronization signal.

9. The method according to any one of claims 3 to 8, wherein a scrambling code corresponding to the system information is used to indicate a subframe carrying the system information.

10. The method according to any one of claims 1 to 9, wherein the synchronization signal is a secondary synchronization signal.

11. An information transmission method, comprising:
determining, by a terminal, a sequence corresponding to a synchronization signal; and
determining, by the terminal based on the sequence corresponding to the synchronization signal, a time-frequency resource carrying system information.

12. The method according to claim 11, wherein the determining, by the terminal based on the sequence corresponding to the synchronization signal, a time-frequency resource carrying system information comprises:
if the sequence corresponding to the synchronization signal is a first sequence, determining, by the terminal, that the time-frequency resource carrying the system information is a first time-frequency resource; or
if the sequence corresponding to the synchronization signal is a second sequence, determining, by the terminal, that the time-frequency resource carrying the system information is a second time-frequency resource, wherein
a frequency domain location of the first time-frequency resource is the same as a frequency domain location of a time-frequency resource carrying the synchronization signal, or a frequency domain location corresponding to the first time-frequency resource comprises a frequency domain location corresponding to a time-frequency resource carrying the synchronization signal; and
a frequency domain location of the second time-frequency resource is adjacent to the frequency domain location of the time-frequency resource carrying the synchronization signal, or a frequency domain location corresponding to the second time-frequency resource and the frequency domain location corresponding to the time-frequency resource carrying the synchronization signal are separated by a fixed frequency shift.

13. The method according to claim 12, wherein
a start symbol of the first time-frequency resource is adjacent to a last symbol carrying the synchronization signal; or a start symbol of the first time-frequency resource is a next symbol of a last symbol carrying the synchronization signal; or if a last symbol carrying the synchronization signal is a symbol *l*, a start symbol of the first time-frequency resource is a symbol (*l*+1) or a symbol (*l*+1) mod *L*, wherein *l*=0,1,···*L-*1, and *L* is a positive integer; and
a symbol of the second time-frequency resource is the same as a symbol carrying the synchronization signal; or a start symbol of the second time-frequency resource is the same as a start symbol carrying a primary synchronization signal comprised in the synchronization signal.

14. The method according to any one of claims 11 to 13, wherein the first sequence is generated in a first combination manner by using two 31-length sequences, the second sequence is generated in a second combination manner by using the two 31-length sequences, and the first combination manner is different from the second combination manner.

15. An information transmission method, comprising:
determining, by a network device, a subcarrier spacing corresponding to a synchronization signal, wherein the subcarrier spacing corresponding to the synchronization signal is a largest subcarrier spacing in a subcarrier spacing set corresponding to a serving cell carrying the synchronization signal; and
sending, by the network device, the synchronization signal based on the subcarrier spacing corresponding to the synchronization signal.

16. The method according to claim 15, wherein before the sending, by the network device, the synchronization signal based on the subcarrier spacing corresponding to the synchronization signal, the method further comprises:
determining, by the network device based on the subcarrier spacing corresponding to the synchronization signal, a cyclic prefix set corresponding to the subcarrier spacing; and
determining, by the network device based on the cyclic prefix set, that a cyclic prefix corresponding to a symbol carrying the synchronization signal is a longest cyclic prefix in the cyclic prefix set.

17. The method according to claim 16, wherein the sending, by the network device, the synchronization signal based on the subcarrier spacing corresponding to the synchronization signal comprises:
sending, by the network device, the synchronization signal based on the subcarrier spacing corresponding to the synchronization signal and the cyclic prefix corresponding to the symbol carrying the synchronization signal.

18. The method according to any one of claims 15 to 17, wherein the method further comprises:
determining, by the network device, a time-frequency resource carrying system information; and
determining, by the network device based on the time-frequency resource carrying the system information, a sequence corresponding to the synchronization signal.

19. The method according to claim 18, wherein the determining, by the network device based on the time-frequency resource carrying the system information, a sequence corresponding to the synchronization signal comprises:
if the time-frequency resource carrying the system information is a first time-frequency resource, determining, by the network device, that the sequence corresponding to the synchronization signal is a first sequence; or
if the time-frequency resource carrying the system information is a second time-frequency resource, determining, by the network device, that the sequence corresponding to the synchronization signal is a second sequence, wherein
a frequency domain location of the first time-frequency resource is the same as a frequency domain location of a time-frequency resource carrying the synchronization signal, or a frequency domain location of the first time-frequency resource comprises a frequency domain location of a time-frequency resource carrying the synchronization signal; and
a frequency domain location of the second time-frequency resource is adjacent to the frequency domain location of the time-frequency resource carrying the synchronization signal, or a frequency domain location of the second time-frequency resource and the frequency domain location of the time-frequency resource carrying the synchronization signal are separated by a fixed frequency shift.

20. The method according to claim 19, wherein
a start symbol of the first time-frequency resource is adjacent to a last symbol carrying the synchronization signal; or a start symbol of the first time-frequency resource is a next symbol of a last symbol carrying the synchronization signal; or if a last symbol carrying the synchronization signal is a symbol *l*, a start symbol of the first time-frequency resource is a symbol (*l*+1) or a symbol (*l*+1) mod *L*, wherein *l*=0,1,···*L-*1, and *L* is a positive integer; and
a symbol of the second time-frequency resource is the same as the symbol carrying the synchronization signal; or a start symbol of the second time-frequency resource is the same as a start symbol carrying a primary synchronization signal comprised in the synchronization signal.

21. The method according to claim 19 or 20, wherein that a frequency domain location of the second time-frequency resource is adjacent to the frequency domain location of the time-frequency resource carrying the synchronization signal comprises:
the frequency domain location of the second time-frequency resource is adjacent to the frequency domain location of the time-frequency resource carrying the synchronization signal, and is distributed on two sides of the frequency domain location of the time-frequency resource carrying the synchronization signal.

22. The method according to claim 18, wherein the determining, by the network device based on the time-frequency resource carrying the system information, a sequence corresponding to the synchronization signal comprises:
if the time-frequency resource carrying the system information is a first time-frequency resource, determining, by the network device, that the sequence corresponding to the synchronization signal is a first sequence; or
if the time-frequency resource carrying the system information is a second time-frequency resource, determining, by the network device, that the sequence corresponding to the synchronization signal is a second sequence, wherein
the first time-frequency resource and a time-frequency resource carrying the synchronization signal are subject to time division multiplexing, and the second time-frequency resource and the time-frequency resource carrying the synchronization signal are subject to frequency division multiplexing.

23. The method according to claim 19 or 22, wherein the first sequence is generated in a first combination manner by using two 31-length sequences, the second sequence is generated in a second combination manner by using the two 31-length sequences, and the first combination manner is different from the second combination manner.

24. The method according to any one of claims 18 to 23, wherein
the system information comprises a symbol location indicator field; and
the symbol location indicator field is used to indicate a location of a start symbol carrying the synchronization signal; or the symbol location indicator field is used to indicate an index of a start symbol carrying the synchronization signal; or the symbol location indicator field is used to indicate a time domain shift between a start symbol carrying the synchronization signal and a first symbol of a subframe carrying the synchronization signal; or the location indicator field is used to indicate a location of the start symbol carrying the primary synchronization signal; or the symbol location indicator field is used to indicate an index of the start symbol carrying the primary synchronization signal; or the symbol location indicator field is used to indicate a time domain shift between the start symbol carrying the primary synchronization signal and a first symbol of a sub frame carrying the primary synchronization signal.

25. The method according to any one of claims 18 to 24, wherein a scrambling code corresponding to the system information is used to indicate a subframe carrying the system information.

26. The method according to any one of claims 15 to 25, wherein the synchronization signal is a secondary synchronization signal.

27. An information transmission method, comprising:
determining, by a network device, a time-frequency resource carrying system information; and
determining, by the network device based on the time-frequency resource carrying the system information, a sequence corresponding to the synchronization signal.

28. The method according to claim 27, wherein the determining, by the network device based on the time-frequency resource carrying the system information, a sequence corresponding to the synchronization signal comprises:
if the time-frequency resource carrying the system information is a first time-frequency resource, determining, by the network device, that the sequence corresponding to the synchronization signal is a first sequence; or
if the time-frequency resource carrying the system information is a second time-frequency resource, determining, by the network device, that the sequence corresponding to the synchronization signal is a second sequence, wherein
a frequency domain location of the first time-frequency resource is the same as a frequency domain location of a time-frequency resource carrying the synchronization signal, or a frequency domain location of the first time-frequency resource comprises a frequency domain location of a time-frequency resource carrying the synchronization signal; and
a frequency domain location of the second time-frequency resource is adjacent to the frequency domain location of the time-frequency resource carrying the synchronization signal, or a frequency domain location of the second time-frequency resource and the frequency domain location of the time-frequency resource carrying the synchronization signal are separated by a fixed frequency shift.

29. The method according to claim 28, wherein
a start symbol of the first time-frequency resource is adjacent to a last symbol carrying the synchronization signal; or a start symbol of the first time-frequency resource is a next symbol of a last symbol carrying the synchronization signal; or if a last symbol carrying the synchronization signal is a symbol *l*, a start symbol of the first time-frequency resource is a symbol (*l*+1) or a symbol (*l*+1) mod *L*, wherein *l*=0,1,···*L-*1, and *L* is a positive integer; and
a symbol of the second time-frequency resource is the same as a symbol carrying the synchronization signal; or a start symbol of the second time-frequency resource is the same as a start symbol carrying a primary synchronization signal comprised in the synchronization signal.

30. The method according to claim 27, wherein the determining, by the network device based on the time-frequency resource carrying the system information, a sequence corresponding to the synchronization signal comprises:
if the time-frequency resource carrying the system information is a first time-frequency resource, determining, by the network device, that the sequence corresponding to the synchronization signal is a first sequence; or
if the time-frequency resource carrying the system information is a second time-frequency resource, determining, by the network device, that the sequence corresponding to the synchronization signal is a second sequence, wherein
the first time-frequency resource and a time-frequency resource carrying the synchronization signal are subject to time division multiplexing, and the second time-frequency resource and the time-frequency resource carrying the synchronization signal are subject to frequency division multiplexing.

31. The method according to claim 28 or 30, wherein the first sequence is generated in a first combination manner by using two 31-length sequences, the second sequence is generated in a second combination manner by using the two 31-length sequences, and the first combination manner is different from the second combination manner.

32. A terminal, comprising:
a receiving unit, configured to receive information sent by a network device; and
a processing unit, configured to: determine a subcarrier spacing corresponding to a synchronization signal, wherein the subcarrier spacing corresponding to the synchronization signal is a largest subcarrier spacing in a subcarrier spacing set corresponding to a serving cell carrying the synchronization signal; and detect the synchronization signal based on the subcarrier spacing corresponding to the synchronization signal and the received information sent by the network device.

33. The terminal according to claim 32, wherein
the processing unit is further configured to determine, based on a sequence corresponding to the synchronization signal, a time-frequency resource carrying system information.

34. The terminal according to claim 33, wherein
the processing unit is specifically configured to: if the sequence corresponding to the synchronization signal is a first sequence, determine that the time-frequency resource carrying the system information is a first time-frequency resource; or if the sequence corresponding to the synchronization signal is a second sequence, determine that the time-frequency resource carrying the system information is a second time-frequency resource, wherein
a frequency domain location of the first time-frequency resource is the same as a frequency domain location of a time-frequency resource carrying the synchronization signal, or a frequency domain location corresponding to the first time-frequency resource comprises a frequency domain location corresponding to a time-frequency resource carrying the synchronization signal; and a frequency domain location of the second time-frequency resource is adjacent to the frequency domain location of the time-frequency resource carrying the synchronization signal, or a frequency domain location corresponding to the second time-frequency resource and the frequency domain location corresponding to the time-frequency resource carrying the synchronization signal are separated by a fixed frequency shift.

35. A terminal, comprising:
a receiving unit, configured to receive a synchronization signal sent by a network device; and
a processing unit, configured to: determine a sequence corresponding to the synchronization signal based on the received synchronization signal sent by the network device, and determine, based on the sequence corresponding to the synchronization signal, a time-frequency resource carrying system information.

36. The terminal according to claim 35, wherein
the processing unit is specifically configured to: if the sequence corresponding to the synchronization signal is a first sequence, determine that the time-frequency resource carrying the system information is a first time-frequency resource; or if the sequence corresponding to the synchronization signal is a second sequence, determine that the time-frequency resource carrying the system information is a second time-frequency resource, wherein
a frequency domain location of the first time-frequency resource is the same as a frequency domain location of a time-frequency resource carrying the synchronization signal, or a frequency domain location corresponding to the first time-frequency resource comprises a frequency domain location corresponding to a time-frequency resource carrying the synchronization signal; and
a frequency domain location of the second time-frequency resource is adjacent to the frequency domain location of the time-frequency resource carrying the synchronization signal, or a frequency domain location corresponding to the second time-frequency resource and the frequency domain location corresponding to the time-frequency resource carrying the synchronization signal are separated by a fixed frequency shift.

37. A network device, comprising:
a processing unit, configured to determine a subcarrier spacing corresponding to a synchronization signal, wherein the subcarrier spacing corresponding to the synchronization signal is a largest subcarrier spacing in a subcarrier spacing set corresponding to a serving cell carrying the synchronization signal; and
a sending unit, configured to send the synchronization signal based on the subcarrier spacing corresponding to the synchronization signal.

38. The network device according to claim 37, wherein
the processing unit is further configured to: determine, based on the subcarrier spacing corresponding to the synchronization signal, a cyclic prefix set corresponding to the subcarrier spacing; and determine, based on the cyclic prefix set, that a cyclic prefix corresponding to a symbol carrying the synchronization signal is a longest cyclic prefix in the cyclic prefix set.

39. The network device according to claim 38, wherein
the sending unit is specifically configured to send the synchronization signal based on the subcarrier spacing corresponding to the synchronization signal and the cyclic prefix corresponding to the symbol carrying the synchronization signal.

40. The network device according to any one of claims 37 to 39, wherein
the processing unit is further configured to: determine a time-frequency resource carrying system information; and determine, based on the time-frequency resource carrying the system information, a sequence corresponding to the synchronization signal.

41. The network device according to claim 40, wherein
the processing unit is specifically configured to: if the time-frequency resource carrying the system information is a first time-frequency resource, determine that the sequence corresponding to the synchronization signal is a first sequence; or if the time-frequency resource carrying the system information is a second time-frequency resource, determine that the sequence corresponding to the synchronization signal is a second sequence, wherein
a frequency domain location of the first time-frequency resource is the same as a frequency domain location of a time-frequency resource carrying the synchronization signal, or a frequency domain location of the first time-frequency resource comprises a frequency domain location of a time-frequency resource carrying the synchronization signal; and
a frequency domain location of the second time-frequency resource is adjacent to the frequency domain location of the time-frequency resource carrying the synchronization signal, or a frequency domain location of the second time-frequency resource and the frequency domain location of the time-frequency resource carrying the synchronization signal are separated by a fixed frequency shift.

42. The network device according to claim 40, wherein
the processing unit is specifically configured to: if the time-frequency resource carrying the system information is a first time-frequency resource, determine that the sequence corresponding to the synchronization signal is a first sequence; or if the time-frequency resource carrying the system information is a second time-frequency resource, determine that the sequence corresponding to the synchronization signal is a second sequence, wherein
the first time-frequency resource and a time-frequency resource carrying the synchronization signal are subject to time division multiplexing, and the second time-frequency resource and the time-frequency resource carrying the synchronization signal are subject to frequency division multiplexing.

43. A network device, comprising:
a processing unit, configured to: determine a time-frequency resource carrying system information; and determine, based on the time-frequency resource carrying the system information, a sequence corresponding to the synchronization signal; and
a sending unit, configured to send the synchronization signal.

44. The network device according to claim 43, wherein
the processing unit is specifically configured to: if the time-frequency resource carrying the system information is a first time-frequency resource, determine that the sequence corresponding to the synchronization signal is a first sequence; or if the time-frequency resource carrying the system information is a second time-frequency resource, determine that the sequence corresponding to the synchronization signal is a second sequence, wherein
a frequency domain location of the first time-frequency resource is the same as a frequency domain location of a time-frequency resource carrying the synchronization signal, or a frequency domain location of the first time-frequency resource comprises a frequency domain location of a time-frequency resource carrying the synchronization signal; and
a frequency domain location of the second time-frequency resource is adjacent to the frequency domain location of the time-frequency resource carrying the synchronization signal, or a frequency domain location of the second time-frequency resource and the frequency domain location of the time-frequency resource carrying the synchronization signal are separated by a fixed frequency shift.

45. The network device according to claim 43, wherein
the processing unit is specifically configured to: if the time-frequency resource carrying the system information is a first time-frequency resource, determine that the sequence corresponding to the synchronization signal is a first sequence; or if the time-frequency resource carrying the system information is a second time-frequency resource, determine that the sequence corresponding to the synchronization signal is a second sequence, wherein
the first time-frequency resource and a time-frequency resource carrying the synchronization signal are subject to time division multiplexing, and the second time-frequency resource and the time-frequency resource carrying the synchronization signal are subject to frequency division multiplexing.
